# EUROPÄISCHE PATENTSCHRIFT

(11) **EP 0 847 486 B1**
(45) Veröffentlichungstag und Bekanntmachung des Hinweises auf die Patenterteilung: **14.07.1999**
(21) Anmeldenummer: 96937171.5
(22) Anmeldetag: 31.08.1996
(51) Int. Cl.: F02B 75/06, H02P 7/00

(54) **ANTRIEBSSYSTEM, INSBESONDERE FÜR EIN KRAFTFAHRZEUG**
DRIVE SYSTEM, PARTICULARLY FOR A MOTOR VEHICLE
SYSTEME D'ENTRAINEMENT, NOTAMMENT POUR AUTOMOBILE

(30) Priorität: 31.08.1995 DE 19532164
(43) Veröffentlichungstag der Anmeldung: 17.06.1998
(73) Patentinhaber: ISAD Electronic Systems GmbH & Co.KG, 50733 Köln (DE); GRÜNDL UND HOFFMANN GmbH GESELLSCHAFT FÜR ELEKTROTECHNISCHE ENTWICKLUNGEN, 82319 Starnberg (DE)
(72) Erfinder: MASBERG, Ullrich, D-51503 Rösrath (DE); PELS, Thomas, D-46359 Heiden (DE); ZEYEN, Klaus-Peter, D-50670 Köln (DE); GRÜNDL, Andreas, D-81377 München (DE); HOFFMANN, Bernhard, D-82319 Starnberg (DE)
(74) Vertreter: von Samson-Himmelstjerna, Friedrich R., Dipl.-Phys.
(86) Internationale Anmeldenummer: DE9601615
(87) Internationale Veröffentlichungsnummer: WO9708436

(56) Entgegenhaltungen:
- EP-A- 0 354 790
- WO-A-95/02758
- DE-A- 4 027 664
- DE-A- 4 423 577
- PATENT ABSTRACTS OF JAPAN vol. 010, no. 234 (M-507), 14.August 1986 & JP,A,61 066820 (MAZDA MOTOR CORP), 5.April 1986,
- PATENT ABSTRACTS OF JAPAN vol. 013, no. 335 (M-856), 27.Juli 1989 & JP,A,01 113571 (MAZDA MOTOR CORP), 2.Mai 1989,
- PATENT ABSTRACTS OF JAPAN vol. 013, no. 484 (M-886), 2.November 1989 & JP,A,01 190922 (HITACHI LTD), 1.August 1989,

## Beschreibung

Die Erfindung betrifft ein Antriebssystem, insbesondere für ein Kraftfahrzeug.

Der Innenwirkungsgrad eines Verbrennungsmotors (insbesondere eines Verbrennungsmotors mit äußerer Gemischbildung und Fremdzündung) fällt bei kleinen effektiven Zylinder-Mitteldrücken stark ab, wobei dieser Abfall bei niedrigen Drehzahlen besonders ausgeprägt ist. Leistungsstarke Motoren arbeiten daher, wenn ihnen wenig Leistung relativ zu ihrer Maximalleistung abgefordert wird - also ihr effektiver Mitteldruck gering ist - nur mit einem relativ schlechten Wirkungsgrad.

Zur Wirkungsgraderhöhung ist vorgeschlagen worden, in solchen Betriebszuständen einzelne Motorzylinder abzuschalten; siehe z.B. "Kraftfahrtechnisches Taschenbuch", Herausgeber: Robert Bosch GmbH, Düsseldorf, 21. Auflage, 1991, Seite 361. Denn die Zylinderabschaltung bewirkt eine deutliche Erhöhung des effektiven Mitteldrucks in den nicht-abgeschalteten Zylindern, womit eine beträchtliche Erhöhung des Wirkungsgrades (und zwar um insgesamt bis zu 30 %) einhergeht. Die Maßnahme "Zylinderabschaltung" kann also zu einem sparsamen Umgang mit Rohstoffen und einer Verringerung der Umweltbelastung mit giftigen, klimaaktiven oder sonstwie schädlichen Abgasen beitragen.

Aus der JP-A-61 066 820 ist ein Verbrennungsmotor mit Abschaltung eines Teils der Zylinder bekannt, der mit einer elektrischen Maschine zur aktiven Dämpfung von Drehungleichförmigkeiten ausgerüstet ist. Die von der elektrischen Maschine bewirkte Drehmomentkorrektur ist bei Zylinderabschaltbetrieb größer als bei Normalbetrieb.

Eine Abschaltung aller Zylinder eines Verbrennungsmotors im Schubbetrieb ist ferner z.B. aus der DE-A-38 14 484 (MAI) bekannt.

Im folgenden sei der noch folgende ferner liegende Stand der Technik angegeben:

Folgende Veröffentlichungen sind auf Vorrichtungen zur aktiven Dämpfung von Drehungleichförmigkeiten gerichtet:

Patent Abstracts of Japan, Band 11, Nr. 28 (M-557), 27. Januar 1987 & JP-A-61 200 333 (NISSAN I), Patent Abstracts of Japan, Band 4, Nr. 29 (M-002), 14. März 1980 & JP-A-55 005 454 (TOYOTA), EP-A-0 427 568 (ISUZU), DE-A-40 38 301 (HITACHI/NISSAN), EP-A-0 440 088 (NISSAN II), DE-A-32 30 607 (VW I), EP-B-0 175 952 (MAZDA), Patent Abstracts of Japan, Band 7, Nr. 240 (M-251), 25. Oktober 1983 & JP-A-58 126 434 (NISSAN III) und DE-A-41 00 937 (FICHTEL & SACHS).

DE-A-29 02 376 (IVANOV) offenbart eine Vorrichtung zur aktiven Dämpfung von Linearschwingungen.

EP-A-0 437 266 (MAGNET-MOTOR) und DE-B-23 53 724 (HELLING) offenbaren Schwungradspeicher bei Hybridfahrzeugen.

DE-A-44 37 322 (VW II) offenbart bei einem Elektro- oder Hybridfahrzeug die Verwendung einer elektrischen Maschine als Fahrzeugbremse.

DE-A-42 25 683 (PFEIFFER) offenbart eine Antriebsschlupfregelung bei einem Schienenfahrzeug.

DE-A-32 43 513 (VW III) offenbart eine elektrische Maschine, in deren Nachbarschaft eine Kupplung angeordnet ist.

DE-A-33 38 545 (VW IV) und DE-A-44 08 719 (VW V) offenbaren elektromagnetische Kupplungen.

Die Erfindung zielt darauf ab, Antriebsysteme mit Zylinderabschaltung weiterzuentwickeln.

Sie erreicht dieses Ziel mit einem Antriebssystem, insbesondere für ein Kraftfahrzeug, mit:
- einem mehrzylindrigen Verbrennungsmotor;
- einer Einrichtung zur Abschaltung wenigstens eines Zylinders des Verbrennungsmotors;
- einer elektrischen Drehfeldmaschine zur aktiven Dämpfung von Drehungleichförmigkeiten durch Erzeugen wechselnder Drehmomente, wobei die elektrische Maschine wenigstens während Zylinderabschaltbetrieb zur Dämpfung der dort größeren Drehungleichförmigkeiten aktiv ist;
- wenigstens einem Wechselrichter zur Erzeugung der für die magnetischen Felder der elektrischen Maschine benötigten Spannungen und/oder Ströme variabler Frequenz, Amplitude und/oder Phase;
- wobei der Wechselrichter einen Zwischenkreis mit einem gegenüber einem Bordnetz erhöhten Spannungsniveau aufweist;
- und wobei der Wechselrichter im Zwischenkreis mit einem Energiespeicher zum Zwischenspeichern von beim Aktivdämpfen anfallender Energie ausgerüstet ist;
- wobei sowohl die Energieentnahme aus dem Zwischenkreis im Motorbetrieb der elektrischen Maschine als auch die Energieeinspeisung in den Zwischenkreis im Generatorbetrieb auf dem erhöhten Spannungsniveau erfolgt (Anspruch 1).

Vorzugsweise wirkt die elektrische Maschine auf eine Triebwelle des Verbrennungsmotors oder eine damit gekoppelte oder koppelbare Welle (Anspruch 2).

Der Begriff "Zylinderabschaltung" wird hier in einem weiten Sinn verstanden, der alle Möglichkeiten umfaßt, einen oder mehrere Zylinder nicht mehr aktiv antreibend (und nicht mehr unter Durchsatz von Kraftstoff) zu betreiben. Bevorzugt wird dies durch eine Kraftstoff- und ggf. Zündungsabschaltung der entsprechenden Zylinder erzielt, welche zwecks Verringerung von Gaswechselarbeit durch eine sog. Ventilabschaltung ergänzt sein kann. Grundsätzlich möglich ist auch eine mechanische Stillegung des bzw. der entsprechenden Zylinder. In der Literatur wird der Begriff "Zylinderabschaltung" manchmal auch in einem engen Sinn, nämlich im Sinn nur der letztgenannten mechanischen Stillegung verstanden, so z.B. in dem eingangs genannten "Kraftfahrtechnischen Taschenbuch". Dieses enge Verständnis weicht aber - wie gesagt - von dem hier verwendeten weiten Verständnis ab. Ein - hier ebenfalls mit umfaßter - Sonderfall ist die die Abschaltung aller Zylinder des Verbrennungsmotors im Schubbetrieb. Unter "mehrzylindrig" werden z.B. folgende Zylinderzahlen verstanden: 2, 3, 4, 5, 6, 7, 8, 12. Die Welle, auf welche die elektrische Maschine zur Drehungleichförmigkeitsverringerung wirkt, ist z.B. die Kurbelwelle selbst, und zwar z.B. deren abtriebsseitiger Wellenstummel oder ein kein Antriebsmoment übertragende Blindstummel. Alternativ kann sie auf eine Welle des Antriebsstranges wirken, z.B. die antriebsseitig ins Getriebe führende Antriebswelle.

Im Stand der Technik gibt es - wie eingangs erwähnt - Vorschläge für Vorrichtungen zur aktiven Verringerung von Drehungleichförmigkeiten bei Verbrennungsmotoren. Deren Wirkung beruht darauf, daß ein wechselndes oder auch nur in einer Richtung pulsierendes Drehmoment erzeugt wird, welches den Drehungleichförmigkeiten entgegengerichtet ist und diese dadurch mindert. Diese Vorschläge beziehen sich zum Teil auf die Dämpfung von in Leerlauf auftretenden Drehungleichförmigkeiten, so z.B. bei ISUZU I und HITACHI/NISSAN.

Moderne Verbrennungsmotoren, wie sie z.B. für Personenkraftwagen verwendet werden, haben meist nur relativ geringe Drehungleichförmigkeiten. In der Praxis haben daher die obigen Vorschläge zur aktiven Drehschwingungsdämpfung kaum Anwendung gefunden.

Bei einem Motor mit hoher Gleichförmigkeit im Drehverhalten im Zylinderabschaltbetrieb kann es zu größeren Drehungleichförmigkeiten kommen, und zwar insbesondere aus folgendem Grund: Drehungleichförmigkeiten rühren bei einem Hubkolbenmotor hauptsächlich von den auf die Triebwelle (Kurbelwelle) wirkenden Gas- und Massenkräften der einzelnen Hubkolben her. Beispielsweise treten bei einem Vierzylinder-Viertaktmotor Drehungleichförmigkeiten in der zweiten Ordnung (d.h. dem zweifachen der Drehfrequenz des Motors) auf; entsprechend bei einem Sechszylinder-Viertaktmotor in der dritten Ordnung. Daneben gibt es Drehungleichförmigkeiten bei höheren Ordnungen sowie stochastisch auftretende Ungleichförmigkeiten. Üblicherweise sind Motoren so konstruiert, daß sich die Massenkräfte und (mittlere) Gaskräfte teilweise kompensieren. Bei Zylinderabschaltung durch Kraftstoff- und ggf. Ventilabschaltung fallen die Gaskräfte praktisch weg, wodurch auch dieser Kompensationseffekt entfällt. Bei den abgeschalteten Zylindern treten nun (soweit sie nicht stillgelegt sind) die Massenkräfte unkompensiert hervor. Die Folge sind größere Drehungleichförmigkeiten, die Ursache störender Geräusch- und Vibrationsentwicklung sein können, erhöhten Verschleiß verursachen können und zu Komforteinbußen führen können. Auch bei Stillegung von Zylindern kann es zu größeren Drehungleichförmigkeiten kommen.

Die Erfindung ermöglicht die Minderung dieser bei Zylinderabschaltbetrieb verstärkt auftretenden Drehungleichförmigkeiten. Sie macht damit eine Zylinderabschaltung bereits bei Vierzylindermotoren praktisch möglich (z.B. Abschaltung von zwei Zylindern).

Die elektrische Maschine zur aktiven Verringerung von Drehungleichförmigkeiten kann im Zylinderabschalt- und -anschaltbetrieb aktiv sein, und zwar dauernd oder nur in bestimmten Betriebszustände des Verbrennungsmotors (z.B. nur unterhalb einer bestimmten Drehzahl oder nicht während Beschleunigungs- und Verzögerungsvorgängen). Gegebenfalls kann sich die Stärke, mit der sie auf die Triebwelle wirkt, zwischen Abschalt- und Anschaltbetrieb unterscheiden. Alternativ kann sie nur während des Zylinderabschaltbetriebs aktiv sein, wobei wiederum eine dauernde oder eine auf bestimmte Betriebszustände des Verbrennungsmotors beschränkte Aktivität möglich ist.

Das erfindungsgemäße Antriebssystem hat folgende Vorteile:
- es zeigt im Zylinder-Abschaltbetrieb geringere Drehungleichförmigkeiten;
- es führt daher zu geringerer Geräusch- und Vibrationsentwicklung und zeigt vermindertem Verschleiß;
   - es macht eine Zylinderabschaltung auch bei Vierzylindermotoren praktikabel und in bestimmten Fällen - etwa bei Sechszylindermotoren mit Abschaltung auf drei Zylinder - überhaupt erst möglich
- es kann aufgrund dieser Eigenschaften zu einer größeren Verbreitung von Antriebssystemen mit Zylinderabschaltung und damit zu einer Verringerung des Rohstoffverbrauchs und der Umweltbelastung beitragen und stellt somit einen wichtigen Schritt hin zum sog. Drei-Liter-Auto dar.

Grundsätzlich kann die elektrische Maschine zur aktiven Verringerung von Drehungleichförmigkeiten so gesteuert sein, daß ihre drehungleichförmigkeitsverringernde Wirkung unabhängig davon ist, ob Zylinderabschalt- oder -anschaltbetrieb vorliegt. Nimmt man beispielsweise an, daß die Drehungleichförmigkeiten im Anschaltbetrieb halb so groß sind wie im Abschaltbetrieb, dann könnte sie z.B. so gesteuert sein, daß sie im Anschaltbetrieb die Drehungleichförmigkeiten praktisch vollständig unterdrückt, während sie sie im Abschaltbetrieb verringert. Vorteilhaft folgt sie jedoch der Änderung der Drehungleichförmigkeiten verändert also bei einem Übergang von Zylinderabschalt- zu -anschaltbetrieb und/oder zurück ihre Verringerungswirkung, im all gemeinen durch eine Änderung von Phasen und Amplituden der zur Verringerung aufgebrachten Drehmomente (Anspruch 3). Durch diese Maßnahme kann man Drehungleichförmigkeiten sowohl im Abschaltbetrieb als auch im Anschaltbetrieb nahezu vollständig unterdrücken.

Da - wie gesagt - die Drehungleichförmigkeiten i.a. im Abschaltbetrieb größer als im Anschaltbetrieb sind, nimmt die Verringerungswirkung beim Übergang von Zylinderanschalt- zu Zylinderabschaltbetrieb vorzugsweise zu bzw. bei einem umgekehrten Übergang ab (Anspruch 4).

Falls die elektrische Maschine zur aktiven Verringerung von Drehungleichförmigkeiten durch Erfassung der momentan tatsächlich vorliegenden Drehungleichförmigkeit allein auf der Grundlage rückgekoppelter Regelung gesteuert wird, kann grundsätzlich die rückgekoppelte Regelung auch beim Übergang von Zylinderanschalt- zu Zylinderabschaltbetrieb und/-oder umgekehrt für eine entsprechende Änderung der Verringerungswirkung sorgen (Anspruch 5).

Um jedoch bei diesen Übergängen eine Regelverzögerung auszuschließen und eine möglichst instantane Änderung der Verringerungswirkung herbeizuführen, ruft vorzugsweise die Steuerinformation, welche zur Steuerung des Übergangs von Zylinderanschalt- zu -abschaltbetrieb und/oder umgekehrt dient, die Veränderung der Verringerungswirkung hervor (Anspruch 6). Beispielsweise kann bei einer kennfeldgesteuerten Vorrichtung zur aktiven Verringerung von Drehungleichförmigkeiten das die Zylinderab- und anschaltung herbeiführende Steuersignal auch eine Umschaltung zwischen zwei (ggf. adaptiven) Kennfeldern herbeiführen, von denen eines Information über die (erwartete) Drehungleichförmigkeiten bei Abschaltbetrieb und das andere diejenige bei Anschaltbetrieb enthält. Bei einer rückgekoppelten Regelung mit Vorsteuerung kann das Steuersignal z.B. auch zu einer entsprechenden, vom Zylinderab- bzw. -anschaltzustand abhängigen Voreinstellung der Regelung dienen, um so eine Regelverzögerung zu vermeiden.

Im Bereich privater Kraftfahrzeuge gibt es bei vielen Benutzern Widerstände gegen Antriebsysteme mit Zylinderabschaltung, da ihnen die Empfindung, statt beispielsweise mit einem Sechszylindermotor zeitweise nur noch mit einem "Dreizylindermotor" zu fahren, unangenehm ist. Vorteilhaft ist daher das Antriebssystem so ausgebildet, daß der Zylinderabschaltbetrieb und Übergänge in den und aus dem Zylinderabschaltbetrieb für einen Benutzer im wesentlichen unmerklich sind (was von Drehungleichförmigkeiten herrührende Wahrnehmungen des Benutzers, wie entsprechende Geräusche und Vibrationen betrifft; verbleiben könnten z.B. geringfügige Unterschiede im Auspuffgeräusch). Erreicht wird dies durch eine derartige Steuerung der Drehungleichförmigkeits-Verringerungswirkung, daß die verbleibenden Drehungleichförmigkeiten zumindest an den Übergängen praktisch gleich im An- wie im Abschaltbetrieb sind (wobei das Verschwinden der Drehungleichförmigkeiten an den Übergängen bevorzugt ist).

Eine "elektrische Maschine" ist jede Art von Maschine für Rotationsbewegungen, die sowohl als elektrischer Motor wie auch als elektrische Bremse, ggf. als Generator betrieben werden kann.

Grundsätzlich kann die Kopplung der elektrischen Maschine mit dem Antriebsaggregat mittelbar sein, z.B. über ein Getriebe. Vorzugsweise handelt es sich jedoch um eine direkte Kopplung, bei der z.B. der Läufer der elektrischen Maschine - ähnlich einem Schwungrad - unmittelbar auf der Triebwelle des Antriebsaggregats oder einer ggf. koppelbaren Verlängerung dieser Welle sitzt und vorteilhaft drehfest mit dieser gekoppelt oder koppelbar ist.

Unter "Drehfeldmaschine" wird - im Gegensatz zu einer Stromwendermaschine - eine Maschine verstanden, in der ein magnetisches Drehfeld auftritt. Hierbei kann es sich z.B. um eine Asynchron- oder Synchronmaschine, insbesondere für Dreiphasenstrom, oder um eine Maschine mit elektronischer Kommutierung handeln. Bei einer Drehfeldmaschine im engen Sinn überstreicht das magnetische Feld einen vollen 360°-Grad-Umlauf, bei einer Wanderfeldmaschine hingegen nur einen oder mehrere Ausschnitte (Sektoren) hiervon. Bei der Wanderfeldmaschine kann es sich also z.B. um eine Asynchron- oder Synchronmaschine handeln, deren Ständer sich nur über einen oder mehrere Sektoren des Läufers erstreckt - ähnlich einem bzw. mehreren gekrümmten Linearmotor(en).

Das Antriebssystem weist wenigstens einen Wechselrichter zum Erzeugen der für die magnetischen Felder der elektrischen Maschine benötigten Spannungen und/oder Ströme variabler Frequenz, Amplitude und/oder Phase auf. Der Wechselrichter kann die für die magnetischen Felder (insb. Dreh- bzw. Wanderfelder) benötigten Spannungen und/oder Ströme mit (innerhalb gewisser Grenzen) frei wählbarer Frequenz, Amplitude oder Phase oder beliebiger Kombinationen dieser Größen erzeugen. Er kann dies vorteilhaft mit Hilfe elektronischer Schalter aus einer vorgegebenen Gleich- oder Wechselspannung oder einem vorgegebenen Gleich- oder Wechselstrom (sog. Pulswechselrichter) tun. Besonders vorteilhaft sind alle drei Größen - Frequenz, Amplitude und Phase - frei wählbar. Ein Wechselrichterantrieb hat u.a. den Vorteil, mit hoher Variabilität bei unterschiedlichsten Betriebszuständen und verschiedenartigsten Drehungleichförmigkeiten diese effektiv verringern und in vielen Fällen praktisch vollständig unterdrükken zu können und einfach eine ggf. gewünschte Überlagerung eines Zusatz-Drehmoments mit gewünschter Stärke herbeiführen zu können.

Die elektrische Maschine wirkt sowohl negativen als auch positiven Drehungleichförmigkeiten entgegenwirkt.

Dabei wird die Vorrichtung vorzugsweise so gesteuert, daß sie ein schnell alternierendes, und zwar bei einer positiven Drehungleichförmigkeit ein bremsendes und bei einer negativen Drehungleichförmigkeit ein antreibendes Drehmoment erzeugt, dem sie vorteilhaft zur zusätzlichen Erzielung einer antreibenden Wirkung oder einer bremsenden oder generatorischen Wirkung zumindest zeitweise ein positives bzw. negatives Drehmoment (Zusatz-Drehmoment) überlagern kann (Anspruch 7). Bei Ausgestaltungen, bei denen die elektrische Maschine außerdem als elektromagnetische Kupplung wirkt, kann an die Stelle des schnell alternierend bremsenden und antreibenden Drehmoments ein schnell variierend größerer und kleinerer Kupplungsschlupf treten.

Unter einer "schnellen Variation" wird eine Variation im Frequenzbereich der zu verringernden Drehungleichförmigkeiten verstanden, also z.B. bei der Drehungleichförmigkeit der 2. Ordnung und bei einer Drehzahl von 3000 U/min (in neuerer Einheit ausgedrückt: min⁻¹) eine Variation mit einer Frequenz von 100 Hz. Demgegenüber variiert das ggf. überlagerte Zusatz-Drehmoment - abgesehen von möglicherweise steilen Flanken am Anfang oder Ende der Überlagerung - im allgemeinen langsam oder ist konstant.

Durch die (insbesondere additive) Überlagerung des Zusatz-Drehmoments in der gewünschten Richtung und Stärke sind die Drehungleichförmigkeits-Verringerung und die Zusatz-Drehmomenterzeugung voneinander entkoppelt. Das schnell variierende Drehmoment wird in seinem Verlauf durch die Überlagerung praktisch nicht verändert, nur gegenüber der Nullinie verschoben. Ausnahmsweise verändert sich das schnell variierende Drehmoment nur dann, falls der Verbrennungsmotor aufgrund der mit der Zuschaltung des Zusatz-Drehmoments einhergehenden Laständerung tätsächlich geänderte Drehungleichförmigkeiten zeigt.

Falls das momentan gelieferte Zusatz-Drehmoment kleiner als die momentane Amplitude des Wechsel-Drehmoments ist, zeigt das Gesamt-Drehmoment der elektrischen Maschine - wenn auch gegenüber der Nullinie verschoben - abwechselnd positive und negative Werte. Falls es hingegen größer ist, ist das Gesamt-Drehmoment nur positiv oder negativ, wobei dessen Betrag einen schnell variierenden Anteil enthält. Ein bremsendes Zusatz-Drehmoment kann dazu dienen, daß die elektrische Maschine den Kupplungsschlupf verringert, eine bremsende Synchronisier-Funktion ausübt, als Generator zur Stromversorgung fungiert und/oder eine Bremsung des Fahrzeugs herbeiführt oder unterstützt und/oder etwa im Rahmen einer Anti-Schlupf-Regelung durch Bremsen den Schlupf eines Antriebsrads verringert. Die bei Anwenden dieser Bremsfunktionen generatorisch gewonnene Bremsenergie (Zusatzdrehmoment-Bremsenergie) kann - wie die von Drehungleichförmigkeiten herrührende - gespeichert werden (z.B. in einem elektrischen Speicher oder in einem Schwungradspeicher) und als Antriebsenergie wiederverwendet oder in ein Netz oder z.B. die Fahrzeugbatterie eingespeist werden. Ein antreibendes Zusatz-Drehmoment kann einer beschleunigenden Synchronisierfunktion dienen oder eine Beschleunigung des Fahrzeugs unterstützen (die elektrische Maschine wirkt dann als "Booster") oder herbeiführen, beispielsweise um Beschleunigungslöcher, etwa bei einem Turbolader-Motor, zu füllen.

Um einen möglichst hohen Gesamtwirkungsgrad des Antriebssystems zu erzielen, wird die beim Verringern einer positiven Drehungleichförmigkeit gewonnene Energie (Drehungleichförmigkeits-Bremsenergie) sowie ggf. die bei bremsendem Zusatz-Drehmoment gewonnene Energie (Zusatzdrehmoment-Bremsenergie) wenigstens teilweise gespeichert und die gespeicherte Drehungleichförmigkeits-Bremsenergie wird wenigstens teilweise zum Verringern einer negativen Drehungleichförmigkeit wiederverwendet.

Die Speicherung der Drehungleichförmigkeits-Bremsenergie sowie ggf. der Zusatzdrehmoment-Bremsenergie kann insbesondere durch einen elektrischen Speicher und/oder einen mechanischen Speicher (Schwungradspeicher) erfolgen: Als elektrischer Speicher kann beispielsweise eine Kapazität, Induktivität oder eine (schnelle) Batterie dienen. Der Wechselrichter ist ein Zwischenkreis-Wechselrichter, der im Zwischenkreis mit wenigstens einem Speicher für Bremsenergie ausgerüstet ist. Der Speicher kann entweder ausschließlich der Speicherung von Bremsenergie dienen (in diesem Fall wäre er z.B. zusätzlich zu einem üblicherweise vorhandenen Zwischenkreis-Speicher geschaltet, welcher die beim Wechselrichter-Taktbetrieb erforderlichen Spannungs- bzw. Stromimpulse liefern kann), oder er kann nur teilweise der Speicherung der Bremsenergie dienen, also noch andere Energie - z.B. die zum Taktbetrieb nötige - speichern (im letzteren Fall könnte er z.B. mit dem üblichen Zwischenkreis-Speicher zusammenfallen).

Unter einem "Zwischenkreis" versteht man einen Kreis, welcher im wesentlichen Gleichspannung bzw. -strom liefern kann, aus der ein nachgeschalteter Wechselrichter-Teil (der sog. Maschinen-Wechselrichter) durch Pulsen oder Takten variable Wechselspannungen bzw. -ströme bilden kann. Diese Gleichspannung bzw. dieser Gleichstrom muß Spannungs- bzw. Stromimpulse mit extremer Flankensteilheit und auf hohem Spannungs- bzw. Stromniveau bereitstellen können. Im allgemeinen umfaßt ein Zwischenkreis-Wechselrichter drei Baugruppen, und zwar eine Eingangsbaugruppe zur Versorgung mit bzw. Abfuhr von elektrischer Energie, eine Ausgangsbaugruppe in Form des Maschinen-Wechselrichters und den dazwischenliegenden Zwischenkreis.

Bei einem Schwungradspeicher ist das Schwungrad elektrisch über eine (zweite) elektrische Maschine mit dem Zwischenkreis gekoppelt. Hierbei kann es sich z.B. um eine von einem eigenen Stromrichter gesteuerte Drehfeld- oder Stromwendermaschine handeln. Die elektrische Maschine zur Drehungleichförmigkeits-Verringerung und die Schwungrad-Maschine arbeiten im Gegentakt: Wenn erstere bremsend wirkt, beschleunigt zweitere das Schwungrad bzw. wenn erstere antreibend oder weniger bremsend wirkt, bremst zweitere das Schwungrad. Mit einem solchen Schwungrad-Energiespeicher können relativ hohe Energiedichten gespeichert werden.

Die (erste) elektrische Maschine kann neben der aktiven Verringerung von Drehungleichförmigkeiten gleichzeitig oder zeitlich versetzt auch andere Funktionen ausführen und so herkömmlicherweise auf diese Funktionen spezialisierte Maschinen ersetzen. Insbesondere kann sie außerdem die Funktion eines Starters für den mit der Welle gekoppelten Verbrennungsmotor, und/oder die Funktion eines Generators zur Stromversorgung, z.B. zur Ladung einer Batterie oder Speisung eines Bordnetzes, haben (Anspruch 8). Während des Startvorgangs ist i.a. keine Drehungleichförmigkeits-Verringerung erforderlich; hierzu wird die elektrische Maschine vorübergehend als reiner Elektromotor betrieben. Sie arbeitet vorzugsweise als Direktstarter, d.h. sie ist direkt (getriebelos) mit der Triebwelle des Verbrennungsmotors gekoppelt oder koppelbar und ist so ausgebildet, daß sie den Verbrennungsmotor im Zusammenlauf aus dem Stand starten kann. Die Generatorfunktion ist hingegen i.a. auch während der Drehungleichförmigkeits-Verringerung erwünscht. Durch Überlagerung des schnell variierenden Moments mit einem gleichförmig bremsendes Moment erreicht man im zeitlichen Mittel einen Gewinn elektrischer Energie.

In entsprechender Weise kann die Vorrichtung zur Drehungleichförmigkeits-Verringerung, d.h. insbesondere die elektrische Maschine auch als Zusatzfunktion ein Beschleunigen und/oder Abbremsen der Welle herbeiführen oder unterstützen (Anspruch 9). Beispielsweise kann dies der Beschleunigung eines Kraftfahrzeugs zusammen mit dem Antriebsaggregat dienen. Zum Abbremsen eines Fahrzeugs kann die elektrische Maschine als verschleißfreie, ggf. generatorische Bremse oder Zusatzbremse dienen. Im Zusammenhang mit einer Anti-Schlupf-Regelung kann die elektrische Maschine durch Bremsen schnell das Gesamt-Antriebsmoment und damit den Schlupf eines oder mehrerer Antriebsräder verringern. Bei elektromagnetischer Kupplungskunktion kann der Antriebsrad-Schlupf statt durch Bremsen auch durch Vergrößern des KupplungsSchlupfes verringert werden. Es ist möglich, während der Ausführung dieser Zusatzfunktionen die Drehungleichförmigkeits-Verringerungsfunktion auszuschalten oder beide Funktionen gleichzeitig auszuführen, etwa - wie oben erläutert - durch Überlagern eines entsprechenden antreibenden bzw. bremsenden Moments.

Die bei Anwenden dieser Zusatzfunktionen gewonnene Bremsenergie kann - wie die von Drehungleichförmigkeiten herrührende - gespeichert werden (z.B. im elektrischen Speicher und/oder im Schwungradspeicher) und als Antriebsenergie wiederverwendet oder in ein Netz oder z.B. die Fahrzeugbatterie eingespeist werden. Um bei der Fahrzeugbremsung mit Hilfe der elektrischen Maschine einen möglichst hohen Wirkungsgrad der Bremsenergie-Rückgewinnung zu erzielen, trennt man beim Bremsen vorteilhaft die elektrische Maschine vom Antriebsaggregat mit Hilfe einer dazwischengeschalteten, z.B. mechanischen Kupplung.

Auch zur Versorgung von Hochleistungsverbrauchern, wie Hilfsmaschinen (Klimamaschinen, Servoantriebe, Pumpen und Heizungen) ist es vorteilhaft, daß die elektrische Maschine Strom auf relativ hohem Spannungsniveau, vorzugsweise im oberen Bereich der Niederspannung, wo gerade noch nicht für besonderen Berührungsschutz gesorgt werden muß (z.B. etwa 60 V Gleichspannung) liefert. Die Hochleistungsverbraucher können so elektrisch (statt wie bisher mechanisch bzw. durch Abwärme) auf diesem hohen Spannungsniveau angetrieben bzw. beheizt werden (Anspruch 10). Geht man über diese Spannung hinaus, wird vorzugsweise ein Bereich von 250 - 450 Volt gewählt. Das hohe Spannungsniveau liegt im Zwischenkreis bereits vor, und braucht so nicht besonders für diesen Zusatzzweck erzeugt werden. Für Niederleistungsverbraucher kann zusätzlich ein herkömmliches Niederspannungsbordnetz (12 V oder 24 V) vorgesehen sein.

Die aktive Verringerung von Drehungleichförmigkeiten beruht - wie gesagt - darauf, daß die Vorrichtung positiven und negativen Drehungleichförmigkeiten entgegenwirkt, also bei positiven Drehungleichförmigkeiten bremsend und bei negativen antreibend wirkt. Hierfür benötigt eine Steuereinrichtung der Vorrichtung Information über den Zeitpunkt und ggf. den Betrag einer positiven bzw. negativen Drehungleichförmigkeit.

Eine Möglichkeit, diese Information zu erhalten, liegt in einer Messung der momentanen Drehungleichförmigkeit oder einer anderen, mit ihr gekoppelten Größe. Beruht der Betrieb der Vorrichtung auf dieser Information, so handelt es sich - wie oben bereits erwähnt wurde - um eine (rückgekoppelte) Regelung, da das tatsächliche Vorliegen einer Drehungleichförmigkeit zu einer unmittelbaren Rückwirkung auf diese Drehungleichförmigkeit führt.

Als andere - ebenfalls bereits erwähnte - Möglichkeit verwendet man als Information für den Betrieb der Vorrichtung nicht die tatsächliche, sondern eine erwartete Drehungleichförmigkeit. Es handelt sich hierbei also um eine (nicht-rückgekoppelte) Steuerung. Beispielsweise kann man bei dem Verbrennungsmotor Betrag und Vorzeichen der momentanen Drehungleichförmigkeit als Funktion des (Kurbel)-Wellenwinkels, der Zahl abgeschalteter Zylinder und eines oder weiterer Betriebsparameter (z.B. Drehzahl und Drosselklappenstellung) einmal an einem Prototyp bestimmen bzw. per Rechner simulieren und mit dieser Information, gespeichert in Form eines Kennfeldes, jeden Serien-Verbrennungsmotor ausrüsten. Im Betrieb mißt das System dann den momentan vorliegenden Kurbelwellenwinkel, die Zahl abgeschalteter Zylinder und die weiteren Betriebsparameter (z.B. Drehzahl und Drosselklappenstellung), liest die dazugehörigen gespeicherten Kennfeldwerte für Betrag und Amplitude der erwarteten Drehungleichförmigkeit, und steuert über die Steuereinrichtung die Vorrichtung entsprechend, um der Drehungleichförmigkeit entgegenzuwirken.

Möglich ist außerdem eine adaptive Steuerung, d.h. eine (nicht-rückgekoppelte) Steuerung, bei der die Steuerinfomation jedoch nicht feststehend ist, sondern durch Messung zeitlich vorausgehender Drehungleichförmigkeiten definiert oder zumindest modifiziert wird.

Möglich sind ferner Mischformen der genannten Arten, z.B. können die in einem Kennfeld gespeicherten Erwartungswerte bezüglich einer erwarteten Größe adaptiv sein (z.B. bezüglich der Amplitude), während sie bezüglich einer anderen erwarteten Größe (z.B. Wellenwinkel) feststehend sein könnten. Eine sehr vorteilhafte Kombination ist auch eine Regelung mit Vorsteuerung, bei der z.B. in jedem Regelintervall die Regelung zunächst entsprechend einem erwarteten Drehungleichförmigkeitswert aus einem Kennfeld voreingestellt wird (Vorsteuerung) und anschließend die i.a. kleineren Abweichungen des tatsächlichen Werts zum voreingestellten Wert nachgeregelt werden (Regelung). Diese Steuerart liefert bei relativ geringem Aufwand ein sehr schnelles und genaues Regelverhalten. Es kann auch vorteilhaft sein, bei niedrigen Drehzahlen (z.B. im Leerlauf) mit (rückgekoppelter) Regelung zu arbeiten, dagegen bei höheren Drehzahlen zu (nicht-rückgekoppelter) Steuerung überzugehen. Alle diese Steuerarten können die zusätzlich bereits oben erwähnte Information zur Steuerung des Zylinderabschalt- bzw. -anschaltbetriebs verwenden.

Bei Regelung, adaptiver Steuerung und entsprechenden Mischformen muß die Meßgröße nicht unmittelbar die Drehungleichförmigkeit (ggf. abgeleitet aus einer Messung der Winkellage oder -geschwindigkeit als Funktion der Zeit) sein. Es kann sich vielmehr auch um eine (oder mehrere) andere Größe(n) handeln, die einen Schluß auf zumindest einen Teil der auftretenden Drehungleichförmigkeiten erlaubt (erlauben). Bei einem Verbrennungsmotor kann diese Größe vorteilhaft der Gasdruck in einem oder mehreren Motorzylindern sein. Der Gasdruck ist nämlich eine wesentliche, veränderliche Quelle der Drehungleichförmigkeiten. Außerdem zu berücksichtigen ist eine andere wesentliche, praktisch unveränderliche Quelle - die Massenkräfte. Ihr Beitrag kann in einem Kennfeld fest gespeichert sein. Alternativ (oder ergänzend) kann das momentane Drehmoment des Verbrennungsmotors, z.B. mit Hilfe einer Drehmomentnabe gemessen werden. Die Verwendung des Gasdruckes und/oder des momentanen Drehmoments als Meßgröße erlaubt somit eine relativ einfache und schnelle Regelung, adaptive Steuerung oder entsprechende Mischform. Der Gasdruck und/oder das momentane Drehmoment kann auch eine für die Verbrennungsmotor- und Zylinderabschaltsteuerung nützliche Größe darstellen.

Die elektrische Dreh- bzw. Wanderfeldmaschine des Antriebssystems ist vorzugsweise eine Asynchronmaschine, eine Synchronmaschine oder eine Reluktanzmaschine, insbesondere für Drei-Phasen-Strom. Eine Asynchronmaschine hat i.a. einen relativ einfach aufgebauten Läufer (i. a. einen Läufer mit Kurzschlußwicklungen oder Wicklungen, deren Enden an Schleifringe geführt sind). Hingegen haben Synchronmaschinen (sie haben Läufer mit ausgeprägten magnetischen Polen, z.B. Permanentmagnete oder Elektromagnete, die z.B. über Schleifringe mit Strom gespeist werden). Reluktanzmaschinen gehören im weiteren Sinn zu den Synchronmaschinen. Insbesondere bei der Asynchronmaschine erfolgt die Steuerung der elektrischen Maschine vorzugsweise auf der Grund lage einer feldorientierten Regelung (sog. Vektorregelung). Hierbei wird, ausgehend von direkt meßbaren momentanen Größen, wie angelegte Spannung, Ständerstrom und ggf. Drehzahl, anhand eines rechnerischen dynamischen Maschinenmodells der Ständerstrom in eine drehmomentbildende Komponente, die mit dem Läuferfluß das Drehmoment erzeugt, und eine senkrecht dazu verlaufende, den Maschinenfluß erzeugende Komponente rechnerisch zerlegt und so das Drehmoment ermittelt.

Bei der Vorrichtung zur aktiven Verringerung von Drehungleichförmigkeiten handelt es sich i. a. um eine Hilfsvorrichtung, die z.B. im Triebstrang eines Kraftfahrzeugs mit dem Antriebsaggregat (Verbrennungsmotor) angeordnet ist. Wegen ihres Hilfs-Charakters sollte sie relativ zum Antriebsaggregat wenig Raum beanspruchen, sollte also möglichst kompakt aufgebaut sein. Die im folgenden genannten vorteilhaften Maßnahmen dienen - neben anderen vorteilhaften Zwecken - einem solch kompakten Aufbau.

Eine Maßnahme zur Erzielung hoher Kompaktheit liegt darin, daß die elektrische Maschine eine feine Polteilung, insbesondere wenigstens einen Pol pro 45°-Ständerwinkel aufweist. Bei einer kreisförmig geschlossenen (360°-)Drehfeldmaschine entspricht dies einer Gesamtzahl von wenigstens acht Polen. Besonders vorteilhaft sind noch feinere Polteilungen, entsprechend z.B. 10, 12, 14, 16 oder mehr Polen bei der kreisförmig geschlossenen Maschine. Eine feine Polteilung erlaubt es nämlich, die Wickelköpfe des Ständers klein auszubilden, und zwar sowohl in Axial- wie auch in Umfangsrichtung der Maschine, so daß die Maschine in Axialrichtung insgesamt kürzer ausgebildet sein kann. Auch kann bei feinerer Polteilung der Ständerrücken für den magnetischen Rückfluß dünner (und damit auch leichter) ausgebildet sein, mit der Folge, daß bei gleichem Außendurchmesser der Maschine der Läufer einen größeren Durchmesser haben kann. Größerer Läuferdurchmesser führt wegen des in Umfangsrichtung längeren Luftspaltes und des größeren wirksamen Hebelarms zu einem größeren Drehmoment. Insgesamt führt somit eine feinere Polteilung zu einer kompakteren und leichteren Maschine. Daneben sind wegen der geringeren Wickeldrahtlänge - kleinere Wickelköpfe benötigen weniger nicht-aktiven Wicklungsdraht - die ohmschen Verluste geringer. Da ferner das Streufeld (das den Blindleistungsanteil wesentlich bestimmt) von der Wickelkopffläche abhängt, ist es bei feiner Polteilung relativ gering. Ein geringes Streufeld ist insbesondere bei der Drehungleichförmigkeits-Verringerung vorteilhaft, da hier - anders als bei einer üblichen elektrischen Maschine - dauernd zwischen Motor- und Generatorbetrieb hin- und hergewechselt wird und bei dem damit einhergehenden Umpolen laufend Blindleistung aufgebracht werden muß.

Bei schnell laufenden Drehfeld-Maschinen sind feine Polteilungen unüblich, da sie eine relativ hohe Polwechselfrequenz bedingen. Ein üblicher Wert für die Polwechselfrequenz beträgt beispielsweise 120 Hz. Die im Rahmen der Erfindung verwendete elektrische Maschine hat hingegen vorteilhaft eine hohe maximale Polwechselfrequenz, vorzugsweise zwischen 300 und 1600 Hz und mehr, besonders vorzugsweise zwischen 400 Hz und 1500 Hz.

Um den Einfluß von Wirbelströmen im Ständer - die mit steigender Polwechselfrequenz zunehmen - zu verringern, weist der Ständer vorteilhaft dünne Ständerbleche, vorzugsweise mit einer Dicke von 0,35 mm oder weniger, besonders vorzugsweise 0,25 mm oder weniger auf. Als weitere Maßnahme zur Verringerung der Verluste sind die Ständerbleche vorzugsweise aus einem Material mit niedrigen Ummagnetisierungsverlusten, insbesondere kleiner als 1 Watt/kg bei 50 Hz und 1 Tesla, gefertigt.

Als weitere Maßnahme, die zu einer kompakten Ausbildung beiträgt, weist die elektrische Maschine vorteilhaft eine innere Fluidkühlung (mit einer Kühlflüssigkeit wie z.B. a) auf. Eine sehr effektive Kühltechnik besteht darin, die Maschine im Inneren ganz unter Kühlung zu setzen. Ein Nachteil hiervor ist jedoch, daß oberhalb ca. 500 U/min Turbulenzverluste auftreten, die oberhalb ca. 2000 U/min merkliche Ausmaße annehmen können. Um dem zu begegnen, erfolgt die Zufuhr des Kühlfluids vorteilhaft verlustleistungs- und/oder drehzahlabhängig, wobei es sich bei der Fluidkühlung vorzugsweise um eine Sprühfluidkühlung handelt. In der Maschine befindet sich dann immer nur im wesentlichen soviel Kühlfluid, wie momentan zur Abfuhr der Verlustleistung benötigt wird.

Quantitativ läßt sich die Kompaktheit durch die Größe "Drehmomentdichte" ausdrücken. Vorzugsweise weist die elektrische Maschine eine hohe Drehmomentdichte - bezogen auf das maximale Drehmoment - auf, die besonders vorzugsweise größer als 0,01 Nm/cm³ ist.

An einer Welle mit Drehungleichförmigkeiten können oft auch Radialschwingungen auftreten, insbesondere an der Kurbelwelle. Um robust gegenüber Radialschwingungen zu sein, ist das System vorzugsweise so ausgebildet, daß die elektrische Maschine stark im Bereich magnetischer Sättigung arbeitet. Ein Maß für die magnetische Sättigung ist der Strombelag (bei maximalem Drehmoment) im Ständer pro cm Luftspaltlänge in Umfangsrichtung. Vorzugsweise beträgt dieses Maß wenigstens 400 - 1000 A/cm, besonders vorzugsweise wenigstens 500 A/cm. Das Arbeiten stark im Sättigungsbereich erlaubt es, die Maschine mit einem relativ weiten Luftspalt auszubilden. Änderungen des Luftspaltes - wie sie bei Radialschwingungen auftreten - wirken sich wegen des Betriebs im Sättigungsbereich kaum aus.

Eine derart kompakt aufgebaute elektrische Maschine hat im allgemeinen eine relativ geringe Induktivität. Um hier dennoch beispielsweise mit Hilfe einer getakteten Spannung einen möglichst genau sinusförmigen Strom zum Erzeugen der elektrischen Dreh- bzw. Wanderfelder zu erzielen, arbeitet der Wechselrichter vorteilhaft zumindest zeitweise mit einer hohen Taktfrequenz, insbesondere 10 kHz bis 100 kHz und höher. Diese Maßnahme ist auch vorteilhaft zur Erzielung einer hohen zeitlichen Auflösung des Systems: Beispielsweise kann man mit einer Taktfrequenz von 20 kHz eine zeitliche Auflösung im Drehmomentverhalten der elektrischen Maschine von 2 kHz erzielen, mit der man eine Drehungleichförmigkeit bei 200 Hz wirksam verringern kann (200 Hz entsprechen zum Beispiel der vierten Ordnung bei 3000 U/min). Eine hohe Taktfrequenz hat ferner auch den Vorteil, eine kompakte Bauweise des Wechselrichters selbst zu erlauben: Denn beispielsweise bei einem Spannungszwischenkreis-Wechselrichter ist die Kapazität im Zwischenkreis, welche den elektronischen Schaltern des Wechselrichters die Zwischenkreisspannung bereitstellt, umgekehrt proportional zur Frequenz, so daß bei höherer Taktfrequenz hierfür eine kleinere Kapazität ausreicht. Die kleineren Zwischenkreiskondensatoren können mit kurzen Leitungswegen unmittelbar neben den elektronischen Schaltern angeordnet werden. Ferner kann eine nötige EMV-Filterung (EMV: Elektromagnetische Verträglichkeit) des Wechselrichters nach außen kompakter ausgeführt sein, da die Größe der Filter umgekehrt proportional zur Taktfrequenz ist.

Als weitere vorteilhafte Maßnahme zur Erzielung einer kompakten Bauweise des Wechselrichters sind elektronische Schalter des Wechselrichters fluidgekühlt, vorzugsweise siedebadgekühlt. Als Siedebad-Kühlmittel kann beispielsweise ein Fluorkohlenwasserstoff verwendet werden. Bei der Siedebadkühlung verdampft das Kühlmittel an Wärmepunkten und entzieht ihnen dadurch seine relativ hohe Verdampfungswärme. Der Dampf steigt auf und kann z.B. in einem externen Kühler kondensieren und dabei seine Verdampfungswärme abgeben. Diese Kühltechnik erlaubt kompakteste Anordnung der elektronischen Schalter des Wechselrichters ohne jegliche Kühlkörper. Daneben hat sie den Vorteil, daß zur Erreichung auch hoher Kühlleistung relativ geringe Temperaturdifferenzen ausreichen: Während bei einer Luftkühlung üblicherweise eine Temperaturdifferenz von 40° C zwischen Kühloberfläche und dem Gehäuse eines zu kühlenden Chips nötig ist, reicht hier bereits eine Differenz von 2-10° C, insbesondere ungefähr 5° C aus. Als Folge sind hohe Umgebungstemperaturen tolerabel, beispielsweise bei einer Chiptemperatur von 65° C eine Umgebungstemperatur bis 60° C. Die Abwesenheit von Kühlkörpern und die hohe erzielbare Kompaktheit ermöglicht ferner eine hohe Rüttelfestigkeit; daneben erlaubt das Siedebad die Schaffung einer sauerstofffreien Atmosphäre im Bereich der elektronischen Bauelemente des Wechselrichters, was sich insgesamt lebensdauerverlängernd auswirkt. Das den Kühlraum bildende Gehäuse kann - wenn es aus leitendem Material ausgeführt ist - auch als Abschirmung dienen. Elektrische Zwischenkreis-Speicherelemente zum Bereitstellen zu taktender Spannung bzw. zu taktenden Stroms können innerhalb des Kühlgehäuses angeordnet sein, wodurch sich kurze Leitungswege ergeben können. Ein ggf. gesonderter elektrischer Bremsenergie-Speicher kann innerhalb oder außerhalb des Kühlgehäuses angeordnet sein. Die im letzteren Fall möglicherweise relativ hohen Zuleitungsinduktivitäten stören nicht, da der Bremsenergie-Speicher auf einer relativ "langsamen" Zeitskala arbeitet.

Eine weitere kühltechnisch vorteilhafte Maßnahme besteht darin, mehrere elektronische Schalter des Wechselrichters, insbesondere 2 bis 20 und mehr, parallel zu schalten. Die Parallelschaltung führt zu einer verteilten Anordnung der Wärmequellen und damit einer relativ geringen Verlustleistungsdichte.

Der Wechselrichter umfaßt vorteilhaft als Schalter Halbleiterschalter, vorzugsweise schnelle Halbleiterschalter, wie Feldeffekttransistoren - besonders vorzugsweise Metalloxidhalbleiter(MOS)-Feldeffekttransistoren, bipolare Transistoren und/oder bipolare Transistoren mit isoliertem Gateanschluß (IGBTs). Unter "schnellen" Halbleiterschaltern werden insbesondere solche verstanden, die maximale Taktfrequenzen von 10 bis 100 kHz oder mehr erlauben. MOS-Feldeffekttransistoren haben bei hohen Taktfrequenzen die relativ geringsten Verluste. Sie weisen eine Ohmsche Charakteristik auf (während andere Halbleiterbauelemente im allgemeinen eine feste Verlustcharakteristik haben), so daß im Teillastbetrieb die Verluste relativ gering sind.

Der Wechselrichter erzeugt die für die magnetischen Felder der elektrischen Maschine benötigten Spannungen und/oder Ströme vorzugsweise durch Pulse, insbesondere auf der Grundlage von Pulsweiten- oder Pulsamplitudenmodulation. Bei konstanter Zwischenkreisspannung lassen sich durch sinusbewertete Pulsweitenmodulation bei hohen Taktfrequenzen aufgrund der Maschineninduktivität nahezu sinusförmige Ströme beliebig einstellbarer Frequenz, Amplitude und/oder Phase erzeugen. Bei der Pulsamplitudenmodulation geht man beispielsweise aus von einem Wechselrichter mit variabler Zwischenkreisspannung und erzeugt so Pulse verschiedener Amplituden.

Um bei dem System zu jedem Zeitpunkt die momentane Winkellage der Welle zu kennen, ist die die elektrische Maschine oder die Welle vorteilhaft mit einem Läuferlage- bzw. Wellenlage-Geber ausgerüstet. Aus der Information über die momentane Winkellage kann auf die momentane Winkelgeschwindigkeit und -beschleunigung und damit auf momentane Drehungleichförmigkeiten geschlossen werden. Auf dieser Information kann - wie oben ausgeführt wurde - bei einer geregelten Vorrichtung die Drehungleichförmigkeits-Verringerung basieren. Bei einer gesteuerten Vorrichtung wird die Information über die momentane Winkellage und ggf. die momentane mittlere Drehzahl gebraucht, um den richtigen Erwartungswert aus dem Kennfeld auszulesen. Zur Gewinnung einer möglichst genauen Winkellage-Information kann insbesondere ein Drehtransformator (ein sog. Resolver) dienen, also ein Transformator mit winkelabhängigem Übertragungsverhältnis. Auch hochauflösende Kodierer sind für diesen Zweck einsetzbar, z.B. eine Kombination aus einem hochauflösenden Inkrementalgeber und einem einfachen Absolutgeber.

Herkömmlicherweise verwendet man in Antriebssystemen von Kraftfahrzeugen reibschlüssige Kupplungen, welche ein Anfahren des Kraftfahrzeugs mit Drehmomentwandlung ("schleifende Kupplung") in der Anfahrphase ermöglichen. Ihre weitere Aufgabe besteht darin, einen Gangwechsel durch Trennen des Antriebsaggregats (hier des Verbrennungsmotors) von einem Schaltgetriebe und anschließendes Wiederverbinden mit einer durch Reibung bewirkten Drehzahlanpassung von Antriebsaggregat und Getriebe zu erlauben. Bekannt sind ferner hydrodynamische Kupplungen, zum Teil mit Wandlerfunktion.

Anstelle oder ergänzend zu solchen Kupplungen kann vorteilhaft die elektrische Maschine so gestaltet sein, daß sie als elektromagnetische Kupplung im Antriebsstrang und/oder als aktive Getriebe-Synchronisiereinrichtung oder als Teil hiervon wirkt (Anspruch 11). Bei einer "elekromagnetischen Kupplung" erfolgt die Momentübertragung über die Kupplung hinweg durch elektrische, magnetische oder elektromagnetische Kräfte. Es ist möglich, daß diese Art der Kraftübertragung nur zeitweise vorliegt. Zum Beispiel kann nach Erreichen gleicher Drehzahl der zu kuppelnden Wellen die Kraftübertragung von einer mechanischen Kupplung übernommen werden.

Bei einer vorteilhaften Ausgestaltung kann beispielsweise die vom Verbrennungsmotor kommende Antriebswelle mit dem Läufer und die zum Getriebe führende Abtriebswelle mit dem Ständer, der hier drehbar gelagert ist, gekoppelt sein (oder mit umgekehrten Zuordnungen von Läufer und "Ständer"). Die Maschine entspricht z.B. einer normalen Maschine mit Läufer und Ständer, welche zusätzlich zur Läuferrotation als Ganzes drehbar ist. Die als Ganzes drehbare Maschine kann zwischen Läufer und "Ständer" positive und negative Relativdrehmomente erzeugen. Auf diese Weise kann beliebiger (d.h. auch verschwindender) Kupplungsschlupf eingestellt werden sowie eine aktive Beschleunigung oder Bremsung der zum Getriebe führendes Welle zwecks Getriebsynchronisation erzielt werden.

Die elektromagnetische Kupplungsfunktion kann auch vorteilhaft für eine modifizierte Form des Startens eingesetzt werden. Denn zum Direktstarten des Antriebsaggregats müssen reltiav große Drehmomente aufgebracht werden. Als Alternative für den Fall kleinerer, hierfür nicht ausreichender Drehmomente kann die elektrische Maschine vorteilhaft als Schwungmassen-Starter mit elektromagnetisch kuppelbarer Schwungmasse dienen. Als Schwungmasse dient vorzugsweise der Läufer bzw. der "Ständer", ggf. zusammen mit der daran anschließenden, zum Getriebe führenden Welle. Bei freigeschaltetem Gang läßt sich diese in Abstützung gegen die Massenträgheit der Triebwelle und die Kompression des Verbrennungsmotors elektromotorisch auf hohe Drehzahlen hochdrehen. Durch elektromagnetisches Einkuppeln mit Hilfe der elektrischen Maschine selbst wird die Schwungmasse schnell abgebremst und dadurch die Triebwelle derart beschleunigt, daß der Verbrennungsmotor startet. Vorteil gegenüber bekannten Schwungrad-Startern mit mechanischer Einkopplung des Schwungrads (siehe z.B. das Buch D. Henneberger "Elektrische Motorausrüstung", Braunschweig 1990, Seiten 98-103) ist die Vermeidung von Kupplungsverschleiß und die genaue Steuerbarkeit des Einkupplungsvorgangs.

Im übrigen werden in der gesamten vorliegenden Beschreibung Zahlenangaben "x" im Sinn von "wenigstens x", und nur vorzugsweise im Sinn von "genau x" verstanden.

Die Erfindung wird nun anhand von Ausführungsbeispielen und der angefügten schematischen Zeichnung näher erläutert. In der Zeichnung zeigen:
- Fig. 1: eine schematische beispielhafte Darstellung der Funktionsweise des Systems zur aktiven Verringerung von Drehungleichförmigkeiten;
- Fig. 2: eine unmaßstäblich-schematische Darstellung einer Ausführungsform des Systems;
- Fig. 3: eine schematische Schnittdarstellung einer elektrischen Maschine mit Schnittebene senkrecht zur Axialrichtung zur Veranschaulichung verschiedener bei dem System verwendbaren Maschinentypen;
- Fig. 4: einen schematischen Schaltplan eines bei dem System verwendeten Wechselrichters;
- Fig. 5: eine schematische Darstellung eines Steuerablaufs bei Zylinderabschaltbetrieb;
- Fig. 6: eine schematische Darstellung einer elektrischen Maschine mit drehbaren elektromagnetischen Wirkeinheiten.

In den Figuren tragen im wesentlichen funktionsgleiche Teile gleiche Bezugszeichen.

Fig. la veranschaulicht (mit durchgezogener Linie) die Drehzahl n einer Welle als Funktion des Kurbelwellenwinkels ϕ. Die Welle führt um eine mittlere Drehzahl (hier 3000 Umdrehungen pro Minute) periodisch Drehzahlschwankungen zu kleineren und größeren Drehzahlen hin aus, welche in diesem idealisierten Beispiel insgesamt einen im wesentlichen sinusförmigen Verlauf haben. Bei der Welle handelt es sich beispielsweise um die Kurbelwelle eines Vierzylinder-Viertakt-Verbrennungsmotors eines Kraftfahrzeugs, die in der zweiten Ordnung (d.h. bei einer Frequenz von 100 Hz) eine relativ große, von den Gas- und Massenkräften herrührende Drehungleichförmigkeit aufweist. Zur Veranschaulichung ist auch das für eine Umdrehung der Welle benötigte Winkel intervall eingezeichnet. Im allgemeinen treten bei einer Welle außerdem (hier nicht dargestellte) Drehungleichförmigkeiten höherer Ordnungen und solche stochastischer Natur auf. Ihr Verlauf ist also i.a. nicht sinusförmig.

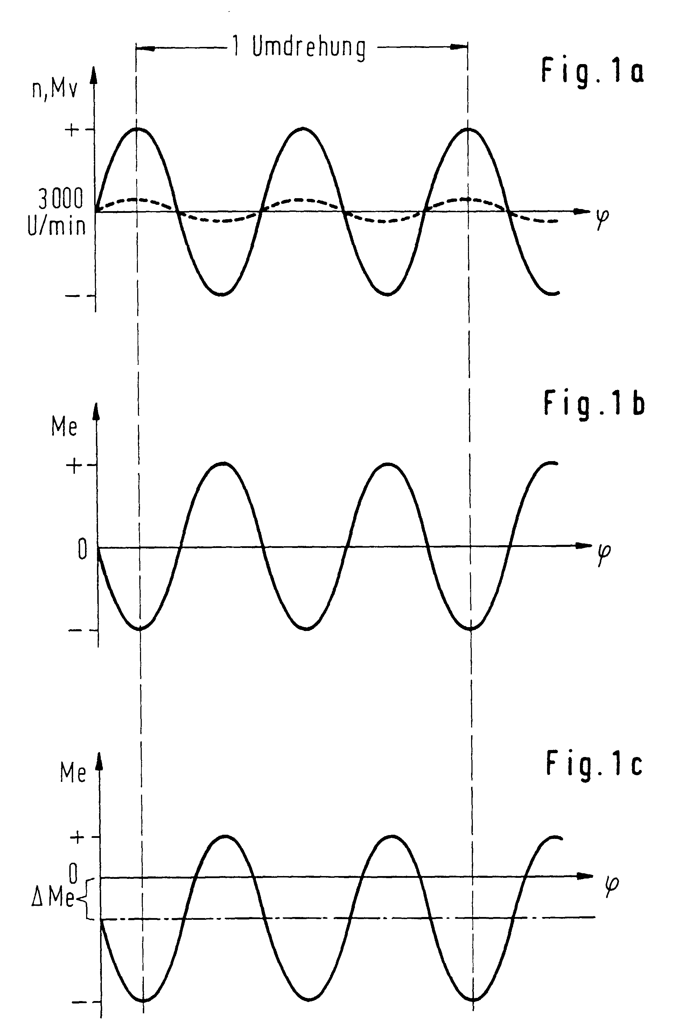

Im wesentlichen proportional zu den Drehungleichförmigkeiten sind Schwankungen des Drehmoments Mv des Verbrennungsmotors um ein mittleres Drehmoment. Die durchgezogene Linie in Fig. 1a veranschaulicht damit auch den Verlauf des Motor-Drehmoments Mv als Funktion des Kurbelwellenwinkels ϕ.

Fig. 1b veranschaulicht das Gesamt-Drehmoment Me als Funktion des Wellenwinkels ϕ, das von einer mit der Welle gekoppelten elektrischen Maschine aufgebracht wird. Der Verlauf des Maschinendrehmoments Me entspricht weitgehend dem der Drehungleichförmigkeit und des Motor-Drehmoments Mv, ist jedoch entgegengesetzt gerichtet. Die Verläufe sind also im wesentlichen gegenphasig. D.h., bei einer Drehungleichförmigkeit zu höheren Drehzahlen hin (sog. positive Drehungleichförmigkeit) erzeugt die elektrische Maschine ein die Welle bremsendes Drehmoment (sog. negatives Drehmoment), wohingegen sie bei einer Drehungleichförmigkeit zu niederen Drehzahlen hin (sog. negative Drehungleichförmigkeit) ein antreibendes Drehmoment (sog. positives Drehmoment) erzeugt. Der Betrag des Drehmoments Me ist so gewählt, daß die Drehungleichförmigkeit - und die zu ihr proportionale Schwankung des Drehmoments Mv - durch dessen Wirkung wesentlich verringert wird oder sogar praktisch verschwindet, wie in Fig. la durch die gestrichelte Linie veranschaulicht ist.

Bei der in Fig. 1b gezeigten Betriebsweise sind die negativen und positiven Drehmomentextrema betragsmäßig gleich groß. Die bei einer Bremsphase gewonnene Energie ist also im wesentlichen gleich groß wie die bei der folgenden Antriebsphase aufzuwendende Energie. Der Energiefluß nach außen ist somit Null, es wird nur im Inneren des System zeitweise Bremsenergie zwischengespeichert. Das System arbeitet also in dieser Betriebsweise als reiner Drehungleichförmigkeits-Verringerer mit schnell variierendem Drehmoment, ohne Erzeugung eines Zusatz-Drehmoments.

Ein Beispiel für eine demgegenüber modifizierte Betriebsweise des Systems mit Zusatz-Drehmoment ist in Fig. 1c gezeigt: Der zeitliche Verlauf des Gesamt-Drehmoments Me entspricht dem von Fig. 1b, es ist jedoch global um einen bestimmten Betrag ΔMe (den sog. Hub) in negative Richtung verschoben. Der Hub ΔMe wird im allgemeinen langsam variieren, in dem hier dargestellten kurzen Zeitrahmen von ungefähr einer Umdrehungsperiode ist er jedoch in guter Näherung konstant. Der Hub ΔMe ist hier kleiner als die Amplitude der schnelle Variation des Drehmoments, so daß das Gesamt-Drehmoment Me alternierend positive und negative Werte annimmt. Gemittelt über die schnelle Drehmomentvariation erhält man ein konstantes Drehmoment -ΔMe. Dem Verbrennungsmotor wird also im Mittel mechanische Energie entzogen, die weitgehend in elektrische Energie umgewandelt und dem System entnommen wird. Die elektrische Maschine hat also in dieser Betriebsart neben der Funktion als Drehungleichförmigkeits-Verringerer die Funktion eines elektrischen Generators, der als Bremse wirken kann und Strom z.B. zum Ausgleichen der Betriebsverluste des Systems, zum Laden der Fahrzeugbatterie und/oder zum Betreiben elektrischer Verbraucher liefern kann.

Falls der Hub ΔMe größer als die Amplitude zur Verringerung der Drehungleichförmigkeit ist, wirkt die elektrische Maschine nur noch bremsend und nicht mehr antreibend, wobei die Bremswirkung in ihrem Betrag entsprechend Fig. 1b und 1c gegenphasig zur Drehungleichförmigkeit variiert.

Allein durch eine entsprechende Einstellung der (Software-)Steuerung der elektrischen Maschine - ohne jegliche konstruktive (Hardware-)Änderungen - sind kleine und sehr große Generatorleistungen einstellbar. Begrenzend wirkt nur die Größe der elektrischen Maschine. Damit kann ein und der selbe Maschinentyp beispielsweise für kleine und große Kraftfahrzeugtypen ohne konstruktive Anpassung verwendet werden.

Der globale Drehmomentverlauf kann auch in positiver Richtung verschoben sein (positiver Hub). Die elektrische Maschine arbeitet dann neben ihrer Funktion als Drehungleichförmigkeits-Verringerer als (antreibender) Motor, z.B. um den Verbrennungsmotor bei einer Fahrzeugbeschleunigung zu unterstützen.

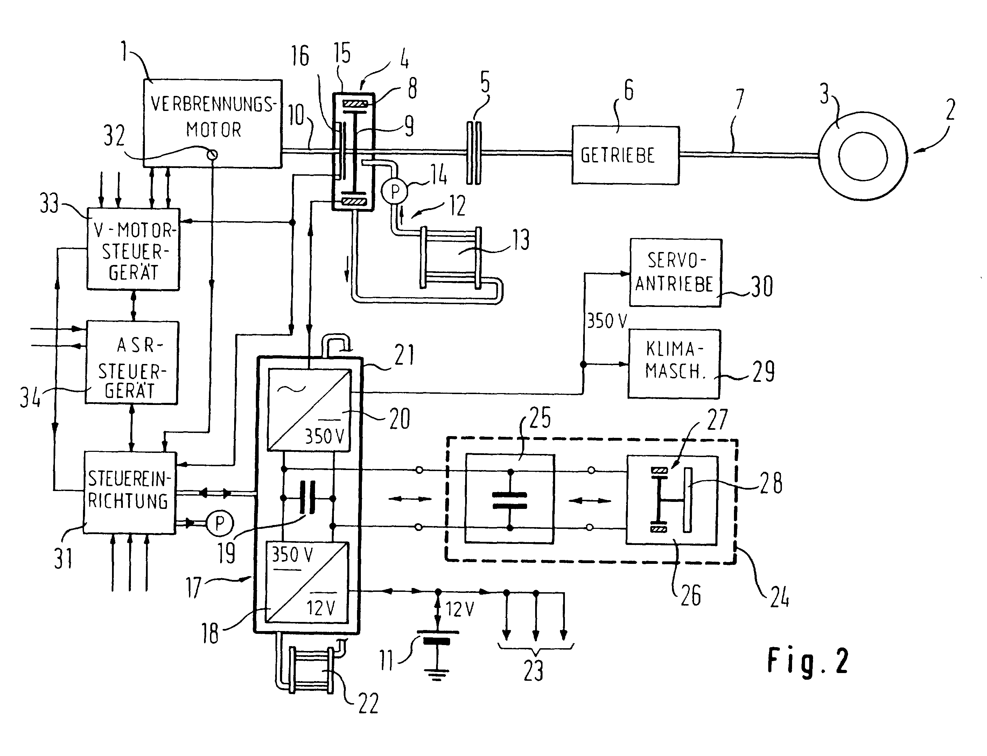

Das in Fig. 2 dargestellte Antriebssystems eines Kraftfahrzeugs, z.B. eines Personenkraftwagens, weist als Antriebsaggregat einen Verbrennungsmotor 1 auf, bei dem es sich beispielsweise um einen Vierzylinder-Viertakt-Otto- oder Dieselmotor handelt. Das vom Verbrennungsmotor 1 erzeugte Drehmoment kann über einen Antriebsstrang 2 auf Antriebsräder 3 übertragen werden. In Abtriebsrichtung ist im Antriebsstrang 2 nach dem Verbrennungsmotor 1 zunächst eine elektrische Maschine 4 angeordnet. Auf diese folgen eine Fahrkupplung 5, ein Getriebe 6 und ein Achsantrieb 7, welcher das Drehmoment auf die Antriebsräder 3 überträgt. Bei der Kupplung 5 und dem Getriebe 6 kann es sich um eine Reibungskupplung und ein Schaltgetriebe handeln; alternativ sind z.B. eine automatische Kupplung oder Wandlerkupplung, jeweils mit Schaltgetriebe oder automatischem Getriebe möglich. Bei anderen (nicht gezeigten) Ausführungsformen ist im Antriebsstrang 2 zwischen Verbrennungsmotor 1 und elektrischer Maschine 4 eine weitere (durch Steuerung betätigte) Kupplung angeordnet, um beim Bremsen mit der elektrischen Maschine 4 einen Mitlauf des Verbrennungsmotors 1 zu vermeiden.

Die elektrische Maschine 4 - hier eine Drehstrom-Wanderfeld-Maschine in Asynchron- oder Synchron-Bauart - umfaßt einen Ständer 8 und einen Läufer 9. Ersterer stützt sich drehfest gegen den Verbrennungsmotor 1, ein (nicht gezeigtes) Fahrzeugchassis oder ein (nicht gezeigtes) Kupplungsgehäuse ab, wohingegen letzterer direkt auf einer Triebwelle (Kurbelwelle) 10 des Verbrennungsmotors 1 oder einer Verlängerung hiervon sitzt und mit dieser drehfest gekoppelt ist. Die Triebwelle 10 und der Läufer 9 rotieren also gemeinsam, ohne Zwischenschaltung eines Getriebes.

Die elektrische Maschine 4 erfüllt mehrere Funktionen: Sie fungiert einerseits als Drehungleichförmigkeits-Verringerer, wie im Zusammenhang mit Fig. 1 bereits erläutert wurde. Andererseits fungiert sie als Generator zur Ladung einer Fahrzeugbatterie 11 und zur Versorgung elektrischer Verbraucher und ersetzt damit eine herkömmlicherweise im Kraftfahrzeug vorhandene Lichtmaschine. Die Generatorfunktion kann ferner zum Abbremsen des Fahrzeugs oder des Verbrennungsmotors 1 dienen. Außerdem kann die elektrische Maschine 4 als Zusatzmotor ("Booster") fungieren, z.B. um den Verbrennungsmotor beim Beschleunigen des Fahrzeugs zu unterstützen. Auch dient sie als Starter für den Verbrennungsmotor und kann somit auch einen herkömmlicherweise beim Kraftfahrzeug gesondert vorgesehenen Starter ("Anlasser") ersetzen. Schließlich fungiert sie aufgrund des Massenträgheitsmoments des Läufers 9 als Schwungrad und kann so das bei herkömmlichen Kraftfahrzeugen häufig vorhandene, auf der Kurbelwelle sitzende Schwungrad ersetzen.

Die elektrische Maschine 4 ist durch eine Sprühfluidkühlung 12 innengekühlt. Nach Durchlaufen eines Kühlers 13 und einer Pumpe 14 wird das Kühlfluid - hier ein geeignetes Öl - an den Läufer 9, und zwar in der Nähe von dessen Rotationsachse, gesprüht. Es wandert aufgrund der Läuferrotation fliehkraftbedingt nach außen und kühlt dabei Läufer 9 und Ständer 8, und verläßt dann ein Gehäuse 15 der elektrischen Maschine 4, um in einem geschlossenen Kreislauf wieder in den Kühler 13 einzutreten. Der Kühlmittelfluß erfolgt verlußtleistungs- und drehzahlabhängig durch entsprechende Steuerung der Pumpe 14, derart, daß sich jeweils im wesentlichen nur eine gerade benötigte Mindestmenge des Kühlfluids im Inneren des Gehäuses 15 befindet. Ein (nicht gezeigtes) Ausgleichsgefäß erlaubt diese Variation der Kühlfluidmenge im Gehäuse 15. Bei anderen (nicht gezeigten) Ausführungsformen ist die elektrische Maschine (oder nur der Läufer) in ein Kupplungs- und/oder Getriebegehäuse integriert und wird durch ein darin befindliches Schmier- und/oder Kühlfluid (z.B. Kupplungs- oder Getriebeöl) mit gekühlt.

Die elektrische Maschine 4 ist außerdem mit einem Drehtransformator 16 (sog. Resolver) ausgerüstet, der vorzugweise mehr als 8 Pole, hier z.B. 12 Pole auweist. Er besteht aus zwei benachbart angeordneten Leiterplatten, von denen eine feststeht und die andere sich mit der Triebwelle 10 dreht. Die Leiterplatten tragen auf ihren zugewandten Oberflächen durch Leiterbahnen gebildete Windungen, derart daß sich ein drehwinkelabhängiges Transformator-Übersetzungsverhältnis ergibt. Der Drehtransformator 16 arbeitet nach dem Transponder-Prinzip: Die feststehenden Windungen (festehende Platine) werden aktiv mit Strom/Spannung beaufschlagt und strahlen elektromagnetische Energie zu den drehbaren Windungen (drehbare Platine) hin ab. Letztere strahlen einen Teil dieser Energie wieder zurück, wobei dieser Teil aufgrund des drehwinkelabhängigen Übertragungsverhältnisses vom Drehwinkel abhängt. Der rückgestrahlte Teil erzeugt in den feststehenden Windungen ein drehwinkelabhängiges Signal. Eine Auswertung dieses Signals liefert den momentanen Drehwinkel der Triebwelle 10 mit einer Genauigkeit von wenigstens 0,5 Grad. Bei einfacheren Ausführungsformen wird ein Inkrementalgeber verwendet.

Ein Wechselrichter 17 liefert dem Ständer 8 der elektrischen Maschine 4 bei einer Taktfrequenz von 100 kHz sinusbewertete pulsweitenmodulierte Spannungsimpulse, die unter der Wirkung der Maschineninduktivität im wesentlichen sinusförmige Dreiphasen-Ströme ergeben, deren Amplitude, Frequenz und Phase frei vorwählbar ist.

Der Wechselrichter 17 ist ein Spannungszwischenkreis-Pulswechselrichter und umfaßt drei Baugruppen: einen Gleichspannungsumsetzer 18 (Eingangsbaugruppe), welcher Gleichspannung von einem niedrigen Niveau (hier 12 V) auf ein höheres Zwischenkreisniveau (hier 60 V oder 350 V) und in umgekehrter Richtung umsetzt, einen elektrischen Zwischenkreisspeicher 19, hier ein Kondensator bzw. eine Anordnung parallel geschalteter Kondensatoren, und einen Maschinen-wechselrichter 21 (Ausgangsbaugruppe), welcher aus der Zwischenkreis-Gleichspannung die (getaktete) Dreiphasen-Wechselspannung variabler Amplitude, Frequenz und Phase erzeugen kann oder - bei generatorischem Betrieb der elektrischen Maschine 4 - derartige beliebige Wechselspannungen in die Zwischenkreis-Gleichspannung umsetzen kann. Bei anderen (nicht gezeigten) Ausführungsformen liegt das Zwischenkreisniveau am oberen Rand des ohne besonderen Berührungsschutz zulässigen Niederspannungsbereichs, hier 60 V.

Die drei Baugruppen 18, 19, 20 des Wechselrichters 17 sind in einem metallischen Gehäuse 21 hermetisch eingeschlossen, welches mit einem geeigneten Siedekühlmittel gefüllt ist. Bei diesem handelt es sich z.B. um einen Fluorkohlenwasserstoff, der bei einem geeigneten Druck (etwa zwischen 50 mbar und 3 bar) einen geeigneten Siedepunkt, z.B. bei 60° C, hat. Verdampftes Siedekühlmittel kann in einem Kondensationskühler 22 kondensieren und in flüssiger Form in einem geschlossenen Kreislauf in das Gehäuse 21 zurückkehren. Das Gehäuse 21 mit dem Kühlkreislauf ist hermetisch dicht.

Der Gleichspannungsumsetzer 18 ist niederspannungsseitig mit der Fahrzeugbatterie 11 und verschiedenen Niederspannungverbrauchern 23, wie beispielsweise Beleuchtung und elektronische Geräte, verbunden. Der Wechselrichter 17 kann einerseits Strom auf niedrigem Spannungsniveau zum Laden der Fahrzeugbatterie 11 und Versorgen der Niederspannungsverbraucher 23 liefern, andererseits kann er der Fahrzeugbatterie 11 Strom auf niedrigem Spannungsniveau zum Starten des Verbrennungsmotors 1 entnehmen. Bei anderen (nicht gezeigten) Ausführungsformen befindet sich die Fahrzeugbatterie auf Zwischenkreisniveau und ist direkt mit dem Zwischenkreis gekoppelt.

Der Zwischenkreisspeicher 19 ist verbunden mit einem externen Zusatzspeicher 24, bei dem es sich um einen elektrischen Speicher, hier eine Zusatzkapazität 25, und/oder einen Schwungradspeicher 26 handeln kann. Der Zusatzspeicher 24 hat in erster Linie die Aufgabe, die beim Drehungleichförmigkeits-Verringern in einer Bremsphase gewonnene Energie zwischenzuspeichern und für die anschließende Antreibphase wieder abzugeben. Daneben kann er auch der Speicherung derjenigen Energie dienen, die bei anderen, durch die elektrische Maschine 4 vermittelten Bremsvorgängen anfällt. Schließlich kann er die Fahrzeugbatterie 11 beim Startvorgang des Verbrennungsmotors 1 entlasten, indem dieser Energie nur langsam entnommen und im Zusatzspeicher 24 gespeichert wird. Hier steht sie dann für eine schnelle Entnahme beim Startvorgang zur Verfügung.

Hingegen hat der (innere) Zwischenkreisspeicher 19 im wesentlichen die Aufgabe, der Maschinen-Wechselrichtergruppe 20 Spannung mit der für das Takten notwendigen hohen Flankensteilheit - also schnell - zu liefern. Er braucht dazu keine sehr hohe Kapazität (er hat z.B. 2 µF), vorteihaft für die Schnelligkeit sind vielmehr geringe Zuleitungsinduktivitäten, was durch die Anordnung im Inneren des Wechselrichters 17 sichergestellt ist (und zwar vorzugsweise auf derselben Platine, auf der auch die elektronischen Schalter des Maschinen-Wechselrichters 20 angeordnet sind). Der Zusatzspeicher 24 kann hingegen relativ langsam arbeiten, so daß hier die Zuleitungskapazitäten aufgrund der externen Anordnung nicht stören. Die Zusatzkapazität 25 kann insbesondere 50 bis 10000 mal größer sein (sie ist hier z.B. 4,7 mF für die Speicherung der Drehungleichförmigkeits-Energie) als die des Zwischenkreisspeichers 19.

Noch größere Speicherkapazitäten sind mit dem Schwungradspeicher 26 erreichbar, der hier eine eigene wechselrichtergesteuerte elektrische Maschine 27 und eine damit gekoppelte Schwungmasse 28 umfaßt. Letztere kann durch ein gesondertes Schwungrad gebildet oder in den Läufer der elektrischen Maschine 27 integriert sein. Das Massenträgheitsmoment der Schwungmasse 28 beträgt vorzugsweise 0,001 bis 0,1 kgm². Es ist auch möglich, in dem Schwungradspeicher 26 ein Mehrfaches der zum Starten des Verbrennungsmotors 1 benötigten Energie zu speichern und ihm zum Starten schnell (d.h. in weniger als einer Sekunde) die jeweils nötige Startenergie zu entnehmen.

Bei anderen (nicht gezeigten) Ausführungsformen ist kein gesonderter Zusatzspeicher 24 vorgesehen. Hier ist der Zwischenkreisspeicher 19 so dimensioniert und ggf. außerhalb des Wechselrichters 17 angeordnet, daß er die Funktionen des Zusatzspeichers 24 mit übernehmen kann.

Der Zwischenkreis mit seinem hohen Spannungsniveau (hier 60 V oder 350 V) versorgt verschiedene Hochleistungsverbraucher, wie eine Klimamaschine 29 und Servoantriebe 30 mit elektrischer Energie. Während derartige Hochleistungsverbraucher herkömmlicherweise durch mechanische Kopplung vom Verbrennungsmotor 1 angetrieben werden, erlaubt das hier zur Verfügung stehende hohe Spannungsniveau einen wirkungsgradmäßig günstigeren, rein elektrischen Antrieb.

Eine Steuereinrichtung 31 gibt dem Wechselrichter 17 durch entsprechende Ansteuerung seiner Halbleiterschalter zu jedem Zeitpunkt vor, welche Amplitude, Frequenz und Phase die von ihm zu erzeugende Wechselspannung haben soll. Die Steuereinrichtung 31, die beispielsweise durch ein entsprechend programmiertes Mikrocomputer-System gebildet sein kann, bestimmt zunächst den Betrag und die Richtung des Drehmoments, welches die elektrische Maschine 4 zu einem bestimmten Zeitpunkt erzeugen soll. Sie kann dies z.B. mit Hilfe einer Kennfeldsteuerung tun, indem sie als Eingangsinformation vom Drehtransformator 16 die Winkelstellung der Triebwelle 10, die momentane mittlere Drehzahl und ggf. weitere Betriebsparameter, wie z.B. die Drosselklappenstellung, erhält und aus einem gespeicherten Kennfeld die momentan zu erwartende Drehungleichförmigkeit in Abhängigkeit von diesen Betriebsparametern ermittelt. Eine andere Möglichkeit besteht darin, die tatsächlich momentan vorliegende Drehungleichförmigkeit zu ermitteln, z.B. durch Berechnung der momentanen Drehgeschwindigkeit auf der Grundlage der vom Drehtransformator 16 gelieferten Information und/-oder durch Auswertung der momentan im Verbrennungsmotor 1 vorliegenden Gasdrücke, welche mit Hilfe von Gasdrucksensoren 32 detektierbar sind, sowie durch Erfassung der momentanen Drehmoments des Verbrennungsmotors 1 mit Hilfe einer (nicht gezeigten) Drehmomentnabe im Antriebsstrang. Möglich ist auch eine Kombination von Regelung und Steuerung. Aus dem so ermittelten Wert für die momentane Drehungleichförmigkeit wird ein entsprechender (gegenphasiger) Wert für das schnell variierende Soll-Drehmoment der elektrischen Maschine 4 abgeleitet, dem ggf. ein positives oder negatives Zusatz-Drehmoment gewünschter Stärke additiv überlagert wird. Zum Starten des Verbrennungsmotors 1 kann das Soll-Drehmoment auf der Grundlage gespeicherter Werte bestimmt werden, die den zeitlichen Soll-Verlauf der Drehzahl oder des Drehmoments der elektrischen Maschine 4 während des Startvorgangs vorgeben, ggf. ergänzt durch eine Messung dieser Größen und eine rückgekoppelte Regelung, welche die Einhaltung der Vorgaben sicherstellt.

In einem zweiten Schritt bestimmt die Steuereinrichtung 31, welche Amplitude, Frequenz und Phase der Spannung bzw. des Stroms vom Wechselrichter 17 bereitgestellt werden muß, damit die elektrische Maschine 4 dieses Soll-Gesamtdrehmoment herbeiführt. Diese Bestimmung erfolgt bei der elektrischen Asynchronmaschine auf der Grundlage einer feldorientierten Regelung, welche auf einer Modellrechnung der elektrischen Maschine 4 beruht und als Eingangsinformation im wesentlichen die meßbaren elektrischen Ständergrößen (Amplitude, Frequenz und Phase von Strom und Spannung) und die momentane mittlere Läuferdrehzahl verwendet.

In Fig. 2 ist die Steuereinrichtung 31 als außerhalb des Wechselrichtergehäuses 21 angeordnet dargestellt. Um die Zuleitungsinduktivitäten gering zu halten und auch an der Siedebadkühlung zu partizipizieren, ist sie jedoch bei anderen (nicht gezeigten) Ausführungsformen im Inneren des Wechselrichtergehäuses 21 angeordnet.

Die Steuereinrichtung 31 teilt verschiedene, zur Erfüllung ihrer Steueraufgaben dienende Sensoren bzw. davon abgeleitete Sensorinformationen mit einem Motorsteuergerät 33 zur Steuerung des Verbrennungsmotors 1. Im einzelnen handelt es sich z.B. um den Drehtransformator 16 (Winkellagegeber), die Gasdrucksensoren 32, daneben (nicht gezeigte) Sensoren zur Erfassung der mittleren Drehzahl, des Lastzustandes des Verbrennungsmotors 1 (z.B. über die Drosselklappenstellung) und dessen Drehmoments (z.B. mit Hilfe einer Drehmomentnabe).

Außerdem kommuniziert die Steuereinrichtung 31 mit einer Vielzahl weiterer Steuergeräte: ein (nicht gezeigtes) Energieverbrauchs-Steuergerät gibt an, wieviel Energie zum Laden der Fahrzeugbatterie 11, zur Versorgung der Niederspannungsverbraucher 23 und der Hochleistungsverbraucher 29, 30 benötigt wird, so daß die Steuereinrichtung 31 eine entsprechende globale Drehmomentverstellung ΔMe (siehe Fig. 1c) veranlassen kann. Das Motorsteuergerät 33 gibt der Steuereinrichtung 31 vor, ob die elektrische Maschine 4 zusätzlich zu ihrer Schwingungsverringerungs-Funktion fahrzeugbeschleunigend oder -bremsend wirken soll, so daß diese eine entsprechende globale Drehmomentverschiebung ΔMe veranlassen kann und ggf. die Drehungleichförmigkeits-Verringerungsfunktion vorübergehend abschalten kann. Entsprechend gibt ein ASR-Steuergerät 34 (ASR=Anti-Schlupf-Regelung) der Steuereinrichtung 31 bei Vorliegen von Antriebsschlupf vor, daß die elektrische Maschine 4 vorübergehend als generatorische Bremse wirken soll, ggf. bevor das ASR-Steuergerät bei verbleibendem Antriebsschlupf als massivere Maßnahme ein Einbremsen der betroffenen Antriebsräder durch die Radbremse veranlaßt. Zusätzlich kann das ASR-Steuergerät seine Schlupfinformation an das Motorsteuergerät 33 übergeben, um außerdem eine Verringerung des Verbrennungsmotor-Drehmoments zu veranlassen. Das Motorsteuergerät 33 kann auch eine automatische Start-Stop-Steuerung durchführen und der Steuereinrichtung 31 vorgeben, ob die elektrische Maschine 4 den Verbrennungsmotor 1 starten soll.

Bei jeder Art von Bremsen gewonnene Energie wird im Zusatzspeicher 24 gespeichert, um zum späteren Antreiben der elektrischen Maschine 4 wiederverwendet oder der Fahrzeugbatterie 11 zugeleitet zu werden.

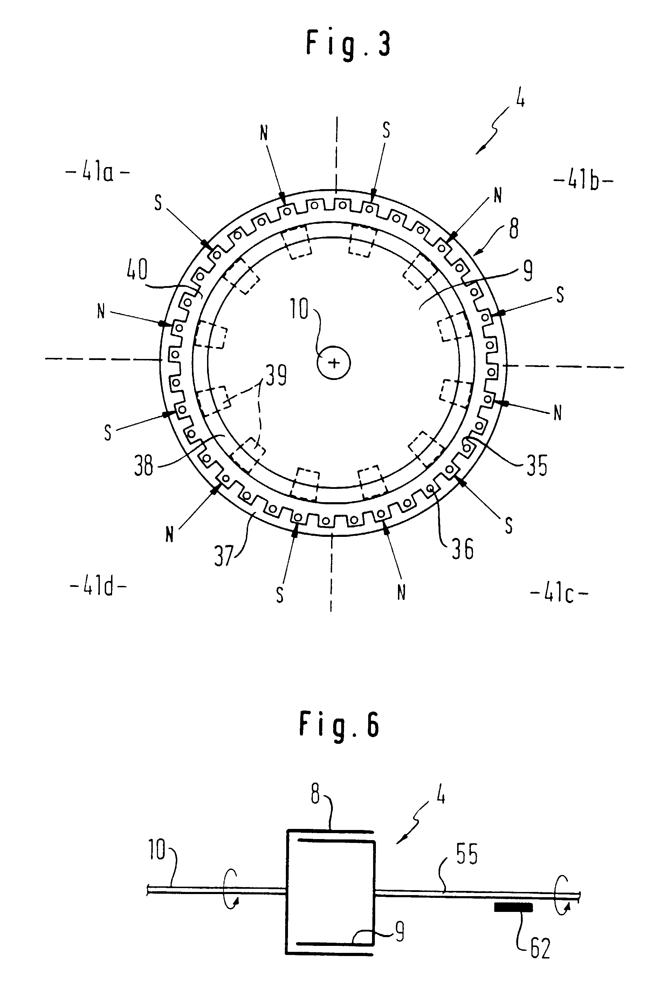

Die in Fig. 3 näher dargestellte elektrische Maschine 4 ist bürsten- bzw. schleiferlos und damit verschleißfrei. Sie hat einen Außendurchmesser von ungefähr 250 mm und eine Länge in Axialrichtung von 55 mm und erbringt bei einem Gewicht von 10-15 kg ein Dauerdrehmoment von ca. 50 Nm und ein Spitzendrehmoment von ca. 150 Nm. Sie kann Drehzahlen erreichen, die den Spitzendrehzahlen üblicher Verbrennungsmotoren (ca. 6000 bis 10000 U/min) entspricht und ist drehzahlfest bis 14000 U/min. Die elektrische Maschine 4 hat einen außenliegenden Ständer 8, welcher Nuten 35 in Richtung der Triebwelle 10 (Axialrichtung) aufweist. Der Ständer 8 trägt eine Drei-Phasen-Wicklung 36, die so ausgebildet ist, daß sie bei Beaufschlagung mit Drei-Phasen-Strom zwölf Pole ausbildet. Pro Pol sind drei Nuten 35, insgesamt also sechsunddreißig Nuten 35 vorhanden. (Bei anderen (nicht gezeigten) Ausführungsformen sind zwecks Verringerung von Streueffektenpro Pol wenigstens 6, vorzugsweise neun Nuten vorhanden.) Die Pole laufen mit der Drehstrom-Oszillation in einer Kreisbewegung im Ständer 8 um. Für einen bestimmten Zeitpunkt ist ihre momentane Lage durch Pfeile, welche die Bezugszeichen "S" (für Südpol) und "N" (für Nordpol) tragen, veranschaulicht. Ein die Nuten 35 nach außen abschließender Rücken 37 ist in Radialrichtung relativ dünn, seine Dicke beträgt (an der Stelle einer Nut 35) vorzugsweise 3-25 mm. Der Ständer 8 ist aus dünnen Statorblechen (die Dicke beträgt hier 0,25 mm) aus einem Material mit niedrigen Ummagnetisierungsverlusten (hier kleiner als 1 W/kg bei 50 Hz und einem Tesla) aufgebaut, mit senkrecht zur Axialrichtung verlaufenden Blechebenen.

Der innenliegende Läufer 9 ist bei der Asynchron-Maschine als Käfigläufer mit im wesentlichen in Axialrichtung verlaufenden Käfigstäben, die jeweils stirnseitig mit einem Kurzschlußring 38 verbunden sind, ausgebildet. Bei der Synchronmaschine trägt der Läufer 9 eine entsprechende Zahl von Polen wie der Ständer 8 (hier zwölf Pole), die durch Permanentmagnete oder entsprechend erregte Spulen gebildet sein können. In Fig. 3 ist die Synchronmaschine ebenfalls veranschaulicht, indem die bei ihr vorhandenen Läuferpole (Bezugsziffer 39) schematisch angedeutet sind.

Der Luftspalt 40 zwischen Läufer 9 und Ständer 8 ist relativ groß; seine Weite beträgt 0,25 bis 2,5 mm, vorzugsweise 0,5 bis 1,5 mm.

Bei anderen (nicht gezeigten) Ausführungsformen ist der Läufer außenliegend und der Ständer innenliegend.

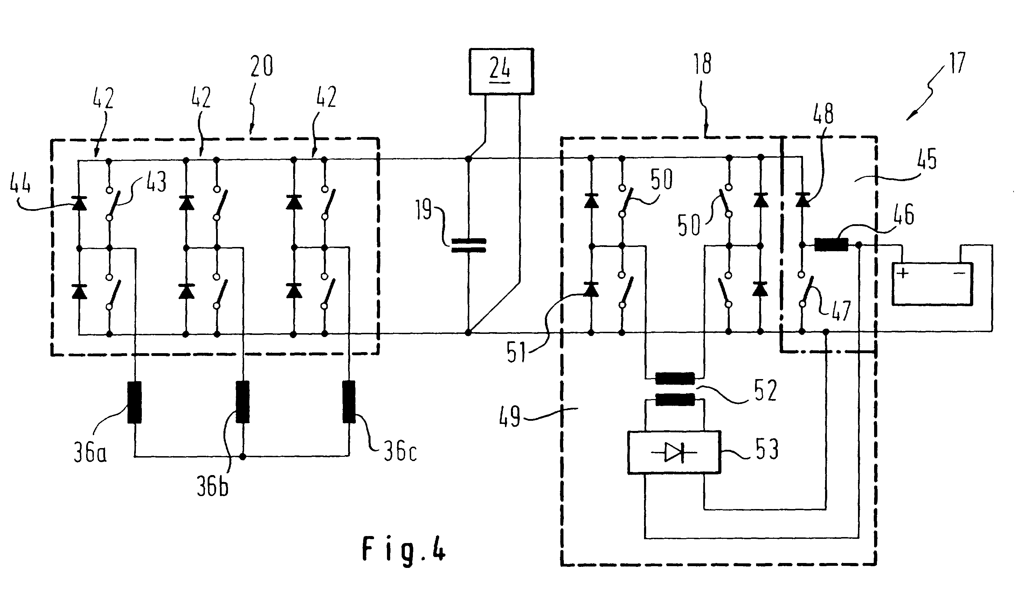

Fig. 4 zeigt einen schematischen Schaltplan des Wechselrichters 17. Man erkennt den Zwischenkreisspeicher 19 in Form einer Kapazität, welcher der (hier nicht näher dargestellte) Zusatzspeicher 24 parallelgeschaltet ist. Die Kapazität symbolisiert eine Parallelschaltung mehrerer Kondensatoren.

Der Maschinenwechselrichter 20 wird durch drei parallelgeschaltete (aber unabhängig schaltbare) Schaltergruppen 42 gebildet, wobei jede der Schaltergruppen 42 für die Erzeugung jeweils einer der drei Drei-Phasen-Spannungen zuständig ist. Jede der Schaltergruppen 42 ist eine Serienschaltung zweier (unabhängig schaltbarer) Schalter 43 zwischen dem Plus- und dem Minuspol des Zwischenkreises. Die Serienschaltung ist mittig (d.h. zwischen den Schaltern 43) mit einer Seite jeweils einer der drei Wicklungen 36a, 36b, 36c der Drei-Phasenwicklung 36 verbunden; an der anderen Seite sind die drei Wicklungen 36a, 36b, 36c miteinander verbunden.

Parallel zu den Schaltern 43 ist jeweils eine Freilaufdiode 44 geschaltet. Sie ist so gepolt, daß sie normalerweise sperrt und, nur wenn der gegenüberliegende Schalter geöffnet wird, einen aufgrund von Selbstinduktion erzeugten, kurzzeitigen Stromfluß in Gegenrichtung durchläßt.

Jeder Schalter 43 symbolisiert eine Parallelschaltung von mehreren (z.B. fünf) MOS-Feldeffektransistoren, welche von der Steuereinrichtung 31 zur Bildung eines Drei-Phasen-Stroms gewünschter Amplitude, Frequenz und Phase direkt angesteuert werden.

Der Gleichspannungsumsetzer 18 umfaßt zwei Unter-Baugruppen, nämlich eine, welche elektrische Energie von dem niedrigen Spannungsniveau (12 V) auf das hohe Zwischenkreis-Spannungsniveau (60 V bzw. 350 V) bringen kann, und eine andere, welche - umgekehrt - elektrische Energie von dem hohen Spannungsniveau (60 V bzw. 350 V) auf das niedrige Spannungsniveau (12 V) bringen kann. Bei Ausführungsformen mit im Zwischenkreis angeordneter Fahrzeugbatterie kann die erstgenannte Unter-Baugruppe entfallen.

Bei der ersten Unter-Baugruppe handelt es z.B. sich um einen Hochsetzsteller 45. Dieser wird durch eine Serienschaltung einer mit dem Pluspol der Fahrzeugbatterie 11 verbundenen Induktivität 46 und einen mit deren Minuspol und dem Minuspol des Zwischenkreises verbundenen Schalter 47 gebildet, wobei diese Serienschaltung mittig über eine (in Durchlaßrichtung gepolte) Hochsetzdiode 48 mit dem Pluspol des Zwischenkreises verbunden ist. Bei geschlossenem Schalter 47 fließt ein Kreisstrom vom Plus- zum Minuspol der Fahrzeugbatterie 11. Nach öffnen des Schalters 47 sucht eine Selbstinduktionsspannung ein Zusammenbrechen dieses Stromes zu verhindern, mit der Folge, daß kurzzeitig das hohe Zwischenkreis-Spannungsniveau (60 V bzw. 350 V) überschritten wird und Strom durch die (ansonsten sperrende) Hochsetzdiode 48 fließt und den Zwischenkreisspeicher 19 auflädt. Durch periodisches Öffnen und Schließen des Schalters 47 erzielt man einen quasi-stationären Ladestrom, z.B. als Vorbereitung des Startvorgangs. Bei dem Schalter 47 handelt es sich um einen Halbleiterschalter, welcher direkt von der Steuereinrichtung 31 angesteuert wird.

Die zweite Unter-Baugruppe ist z.B. ein Spannungsuntersetzer 49, der ähnlich einem Schaltnetzteil funktioniert. Er umfaßt zwei Serienschaltungen von Schaltern 50 zwischen dem Plus- und Minuspol des Zwischenkreises, mit jeweils parallelgeschalteten Freilaufdioden 51. Die Enden einer Primärwicklung eines Hochfrequenz(HF)-Transformators 52 sind jeweils mit den Mitten dieser Serienschaltungen verbunden. Die Sekundärwicklung des HF-Transformators 52 speist eine Gleichrichtungs- und Glättungseinheit 53, welche wiederum die Fahrzeugbatterie 11 und ggf. Niederspannungsverbraucher 23 speist. Die Schalter 50 symbolisieren Halbleiterschalter, welche direkt von der Steuereinrichtung 31 angesteuert werden. Durch periodisches Öffnen und Schließen der Schalter läßt sich ein hochfrequenter Wechselstrom erzeugen, welcher in der Sekundärwicklung des HF-Transformators 52 eine entsprechende Wechselspannung auf niedrigerem Spannungsniveau induziert, welche durch die Einheit 53 gleichgerichtet und geglättet wird. Der genaue Wert der resultierenden Gleichspannung läßt sich mit Hilfe der Schalter 50 durch Variation der Schaltfrequenz genau einstellen.

Die Steuerung der Zylinderabschaltung (und -anschaltung) übernimmt bei der Ausführungsform entsprechend Fig. 2 das Motorsteuergerät 33, während bei anderen (nicht gezeigten) Ausführungsformen hierfür eine dem Antriebsaggregat und der elektrischen Maschine gemeinsame Steuereinrichtung sorgen kann. In beiden Fällen erzeugt das jeweilige Steuergerät - sobald die Bedingungen für eine Zylinderabschaltung vorliegen - ein Zylinderabschaltsignal, welches die Unterbrechung der Kraftstoffzufuhr zu den betreffenden Zylindern herbeiführt. Sobald die Abschalt-Bedingungen nicht (mehr) vorliegen, wird das Abschaltsignal nicht (mehr) erzeugt - es werden dann (wieder) alle Zylinder mit Kraftstoff versorgt.

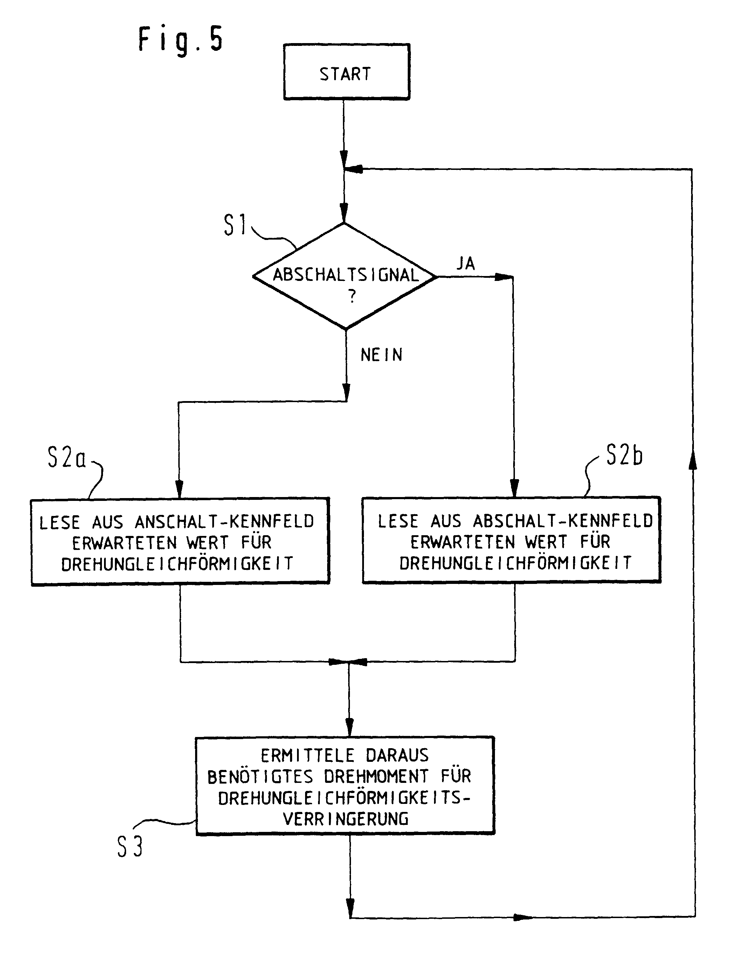

Das Abschaltsignal greift auch in die Steuerung der elektrischen Maschine 4 ein, wie anhand von Fig. 5 für den Fall einer (ggf. adaptiven) Kennfeldsteuerung oder einer Regelung mit (ggf. adaptiver) Kennfeld-Vorsteuerung veranschaulicht ist. Das dort gezeigte Steuerverfahren durchläuft in einer quasi-endlosen Schleife Schritte S1 bis S3.

Im Schritt S1 wird abgefragt, ob ein Zylinderabschaltsignal vorliegt. Falls nein, liest die Steuereinrichtung 31 im Schritt S2a die für den momentanen Betriebszustand (Drehzahl, Motorlast) erwarteten Drehungleichförmigkeits-Werte aus einem ersten Kennfeld, nämlich einem Kennfeld für Anschaltbetrieb (Vollzylinderbetrieb, z.B. Sechszylinderbetrieb) aus. Falls ja, liest sie hingegen im Schritt S2b die entsprechenden - i. a. betragsmäßig größeren - Werte aus einem zweiten Kennfeld, nämlich einem Kennfeld für Abschaltbetrieb (Teilzylinderbetrieb, z.B. Dreizylinderbetrieb) aus. In Abhängigkeit von dem ausgelesenen erwarteten Drehungleichförmigkeits-Wert wird im Schritt S3 das zum Unterdrücken dieser erwarteten Drehungleichförmigkeit benötigte Drehmoment ermittelt und die elektrische Maschine 4 entsprechend gesteuert (alternativ kann statt der erwarteten Drehungleichförmigkeit in den Kennfeldern auch bereits das zu deren Unterdrückung benötigte Drehmoment abgespeichert sein). Anschließend wird Schritt S1 wieder durchgeführt und das Steuerverfahren wird von neuem durchlaufen.

Bei einer (rückgekoppelten) Regelung mit Vorsteuerung handelt es sich bei dem im Schritt S2a bzw. S2b aus dem jeweiligen Kennfeld entnommenen Wert um einen Vorsteuerwert, der im Schritt S3 der Voreinstellung der Regelung dient. Die im Schritt S3 anschließend stattfindende (Nach)-Regelung ist in Fig. 5 nicht ausdrücklich dargestellt. Die Übergange von "Abschaltsignal Aus" zu "Abschaltsignal An" und umgekehrt bewirken hier also eine Änderung der Voreinstellung der Regelung, die der jeweils beim Übergang erwarteten Änderung der Drehungleichförmigkeit entspricht.

Bei anderen (nicht gezeigten) Ausführungsformen gibt es mehrere Stufen von Zylinderabschaltung. Beispielsweise können bei einem Achtzylindermotor in einem Übergangs-Abschaltbereich zunächst nur zwei Zylinder, bei weiterem Fortschreiten in den Abschaltbereich hinein dann insgesamt vier Zylinder abgeschaltet werden. Das oben geschilderte Steuerverfahren läuft dann entsprechend mit zwei Abschaltsignalen und drei Kennfeldern ab.

Bei all diesen Ausführungsformen bemerkt der Benutzer praktisch nichts vom Zylinderabschaltbetrieb und den Übergängen zwischen An- und Abschaltbetrieb und umgekehrt.

Fig. 6 zeigt eine elektrische Einzelmaschine 4, welche die Funktion einer elektromagnetischen Kupplung und/oder Synchronisiereinrichtung hat. Sie weist ein inneres und ein äußeres elektromagnetisches Wirkelement auf, die in Anlehnung an bei elektrischen Maschinen üblichen Bezeichnungsweisen hier Läufer 9 und Ständer 8' genannt werden. Der Läufer 9 ist drehfest mit der Abtriebswelle 55 und der Ständer 8' ist drehfest mit der Triebwelle 10 verbunden (bei anderen - nicht gezeigten - Ausführungsformen ist diese Zuordnung umgekehrt). Die elektrische Maschine 4 ist also zusätzlich zur Läuferdrehung als Ganzes drehbar; der Begriff "Ständer" ist also angesichts dessen Drehbarkeit nur in einem übertragenen Sinn zu verstehen. Während es bei einer feststehenden elektrischen Maschine - z.B. einer Drehfeld-Maschine - möglich ist, die Stromzufuhr auf das feststehende Wirkelement (d.h. den Ständer) zu beschränken und im drehbaren Wirkelement (d.h. im Läufer) Ströme ohne Stromzufuhr nur durch Induktion hervorzurufen, wird hier - wo beide Wirkelemente drehbar sind - wenigstens einem von ihnen (hier dem Ständer 8') Strom über drehbewegliche elektrische Verbindungen (z.B. über hier nicht gezeigte Schleifer/Schleifring-Kontakte) zugeführt. Die Abtriebswelle 55 ist mit einer mechanischen Kupplung, hier einer gegen das Fahrzeugchassis oder das Getriebegehäuse abgestützten Bremse 62 gegen Drehung festlegbar. Die gezeigte Ausführungsform hat keine Überbrückungskupplung, andere (nicht gezeigte) Ausführungsformen sind jedoch mit einer reib- oder kraftschlüssigen Überbrückungskupplung zur mechanischen Verbindung der Wellen 10, 55 ausgerüstet. Die Maschine 4 kann im oder am Motorgehäuse, Getriebegehäuse oder an beliebiger anderer Stelle im Antriebsstrang 2 plaziert sein.

In der Funktion als Schaltkupplung und ggf. als Anfahrkupplung wird ein Gleichlauf der Wellen 10, 55 durch eine solche Einstellung der drehmomenterzeugenden magnetischen Felder der Maschine 4 erzielt, daß Drehzahlgleichheit zwischen den Wellen 10, 55 herrscht, also der Kupplungsschlupf zwischen Ständer 8' und Läufer 9 genau verschwindet. Bei einer Asynchronmaschine wird dies beispielsweise durch die Regelung bzw. Steuerung des magnetischen Schlupfes eines entgegen der Antriebsdrehmoment-Richtung umlaufenden Drehfelds geeigneter Frequenz und Amplitude erzielt. Eine (hier nicht dargestellte) formschlüssige Überbrückungskupplung eliminiert bei verschwindendem Kupplungsschlupf die elektromagnetischen Verluste.

Die aktive Getriebesynchronisierung - die bei Ausführungsformen der Einzelmaschine 4 auch ohne Kupplungsfunktion realisiert sein kann - erfolgt hier in Abstützung gegen die mit der variablen Drehzahl des Verbrennungsmotors 1 drehende Triebwelle 10. Der Beitrag dieser Drehung wird bei der Bestimmung und Steuerung der für die jeweilige Synchronisation nötigen Relativdrehzahl der Maschine 4 berücksichtigt.

Eine Verringerung von Drehungleichförmigkeiten der Triebwelle 10 kann im Stand des Fahrzeugs in Abstützung gegen den dann mit Hilfe der Bremse 62 gegen Drehung festgelegten Läufer 9 erfolgen. Bei angetriebener Fahrt können bei nicht eingekuppelter (oder nicht vorhandener) Überbrückungskupplung Drehungleichförmigkeiten der Abtriebswelle 55 durch schnelles Variieren des übertragenen Drehmoments verringert werden, und zwar durch dessen Verkleinerung (d.h. einer Vergrößerung des Kupplungsschlupfes) bei positiver Drehungleichförmigkeit und dessen Vergrößerung (d.h. einer Verkleinerung des Kupplungsschlupfes) bei negativer. Das Zusammenwirken der Drehungleichförmigkeits-Verringerung mit der Zylinderabschaltung erfolgt wie bei den oben dargestellten Ausführungsformen mit feststehendem Ständer, so daß auf die diesbezüglichen obigen Ausführungen Bezug genommen wird.

Zusatzbeschleunigung oder -bremsung ist bei nicht eingekuppelter Überbrückungskupplung durch Erzeugung entsprechenden Drehmomente - oder anders ausgedrückt - kleineren oder größeren Kupplungsschlupfes möglich. Die elektrische Maschine 4 kann in eine ASR-Regelung derart einbezogen sein, daß bei zu großem Antriebsrad-Schlupf der Kupplungsschlupf augenblicklich vergrößert und damit das an den Antriebsrädern anliegende Moment verkleinert wird. Eine Generatorfunktion zur Stromerzeugung wird durch dauernd aufrechterhaltenen Kupplungsschlupf erzielt.

Die elektrische Maschine 4 kann den Verbrennungsmotors 1 direkt in Abstützung gegen die durch die Bremse 62 festgelegte Abtriebswelle 55 starten. Bei einer anderen Ausführungsform, bei der die Maschine 4 hierfür kein ausreichendes Drehmoment aufbringt, kann sie unter Ausnutzung der elektromagnetischen Kupplungsfunktion als verschleißfreier Schwungradstarter dienen. Hierzu beschleunigt die elektrische Maschine 4 zunächst bei nicht eingelegtem Gang und gelöster Bremse 62 den dann freilaufenden Läufer 9 zusammen mit der Abtriebswelle 55 in Abstützung gegen die Triebwelle 10 und die Kompression des noch nicht laufenden Verbrennungsmotors 1 auf eine relativ hohe Drehzahl, z.B. auf 2000 U/min. Dann wird die elektrische Maschine 4 innerhalb kurzer Zeit so umgesteuert, daß sie ein bremsendes Moment, also Kraftschluß zwischen dem Läufer 9 und dem Ständer 8' herstellt. Dadurch werden der Läufer 9 mit der Abtriebswelle 55 und der Ständer 8' mit der Triebwelle 10 schnell auf eine gemeinsame mittlere Drehzahl (z.B. 800 U/min) gebracht und der Verbrennungsmotor 1 gestartet.

## Patentansprüche

1. Antriebssystem, insbesondere für ein Kraftfahrzeug, mit:
- einem mehrzylindrigen Verbrennungsmotor (1);
- einer Einrichtung (31 bzw. 33) zur Abschaltung wenigstens eines Zylinders des Verbrennungsmotors (1);
- einer elektrischen Drehfeldmaschine (4) zur aktiven Dämpfung von Drehungleichförmigkeiten durch Erzeugen wechselnder Drehmomente, wobei die elektrische Maschine (4) wenigstens während Zylinder-abschaltbetrieb zur Dämpfung der dort größeren Drehungleichförmigkeiten aktiv ist;
- wenigstens einem Wechselrichter (17) zur Erzeugung der für die magnetischen Felder der elektrischen Maschine (4) benötigten Spannungen und/oder Ströme variabler Frequenz, Amplitude und/oder Phase;
- wobei der Wechselrichter (17) einen Zwischenkreis mit einem gegenüber einem Bordnetz erhöhten Spannungsniveau aufweist;
- und wobei der Wechselrichter (17) im Zwischenkreis mit einem Energiespeicher (19, 24) zum Zwischenspeichern von beim Aktivdämpfen anfallender Energie ausgerüstet ist;
- wobei sowohl die Energieentnahme aus dem Zwischenkreis im Motorbetrieb der elektrischen Maschine (4) als auch die Energieeinspeisung in den Zwischenkreis im Generatorbetrieb auf dem erhöhten Spannungsniveau erfolgt.

2. Antriebssystem nach Anspruch 1, bei welchem die elektrische Maschine (4) zur aktiven Dämpfung von Drehungleichförmigkeiten auf eine Triebwelle (10) des Verbrennungsmotors (1) oder eine damit gekoppelte oder koppelbare Welle wirkt.

3. Antriebssystem nach Anspruch i oder 2, bei welchem bei einem Übergang von Zylinderabschalt- zu Zylinderanschaltbetrieb und/oder zurück die elektrische Maschine (4) ihre Dämpfungswirkung verändert.

4. Antriebssystem nach Anspruch 3, bei welchem die Dämpfungswirkung beim Übergang von Zylinderanschalt- zu Zylinderabschaltbetrieb zunimmt bzw. bei einem umgekehrten Übergang abnimmt.

5. Antriebssystem nach Anspruch 3 oder 4, bei welchem beim Übergang von Zylinderanschalt- zu Zylinderabschaltbetrieb und/oder umgekehrt die elektrische Maschine (4) ihre Dämpfungswirkung ohne Verwendung von Steuerinformation der Zylinderan- bzw. -abschaltung auf der Grundlage einer Erfassung momentaner Drehungleichförmigkeiten ändert.

6. Antriebssystem nach Anspruch 3 oder 4, bei welchem Steuerinformation zur Steuerung des Übergangs von Zylinderanschalt- zu Zylinderabschaltbetrieb und/oder umgekehrt die Veränderung der Dämpfungswirkung hervorruft.

7. Antriebssystem nach Anspruch 10, bei welchem die elektrische Maschine (4) den wechselnden Drehmomenten zur Dämpfung von Drehungleichförmigkeiten zur zusätzlichen Erzielung einer antreibenden Wirkung oder einer bremsenden oder generatorischen Wirkung ein positives bzw. negatives Drehmoment überlagern kann.

8. Antriebssystem nach einem der vorhergehenden Ansprüche, bei welchem die elektrische Maschine (4) außerdem die Funktion eines Starters für den Verbrennungsmotor (1) und/oder die Funktion eines Generators zur Stromversorgung ist.

9. Antriebssystem nach einem der Ansprüche 2 bis 8, bei welchem die elektrische Maschine (4) ein Beschleunigen und/oder Abbremsen der Treibwelle (10) bzw. der Welle herbeiführen oder unterstützen kann, um ein Fahrzeug zu beschleunigen bzw. abzubremsen und/oder um im Rahmen einer Anti-Schlupf-Regelung durch Bremsen den Schlupf eines Antriebsrades zu verringern.

10. Antriebssystem nach einem der vorhergehenden Ansprüche, bei welchem aus dem Zwischenkreis Hilfsmaschinen, wie Klimamaschinen (29), Servoantriebe (30), Pumpen, elektrisch auf einem hohen Spannungsniveau angetrieben werden.

11. Antriebssystem nach einem der vorhergehenden Ansprüche, bei welchem die elektrische Maschine (4) als elektromagnetische Kupplung im Antriebsstrang (2) und/oder als aktive Getriebe-Synchronisiereinrichtung oder als ein Teil hiervon wirkt.

## Claims

1. A drive system, especially for a motor vehicle, having:
- a multicylinder internal combustion engine (1);
- a device (31 or 33) for shutting off at least one cylinder of the internal combustion engine (1);
- an electric rotary-field machine (4) for the active dampening of rotational non-uniformities by generating alternating torques, wherein the electric machine (4) is active at least during cylinder shut-off mode for dampening the rotational non-uniformities which are greater there,
- at least one inverter (17) for generating the voltages required for the magnetic fields of the electric machine (4) and/or currents of variable frequency, amplitude and/or phase;
- wherein the inverter (17) has an intermediate circuit with a higher voltage level than an on-board network;
- and wherein the inverter (17) is equipped in the intermediate circuit with an energy accumulator (19, 24) for buffering energy accruing during the active dampening;
- wherein both the removal of energy from the intermediate circuit during motor operation of the electric machine (4) and the feeding of energy into the intermediate circuit in generator mode each occur at the elevated voltage level.

2. A drive system according to Claim 1, in which the electric machine (4) for the active dampening of rotational non-uniformities acts on a drive shaft (10) of the internal combustion engine (1) or a shaft that is coupled or can be coupled thereto.

3. A drive system according to Claim 1 or 2, in which the electric machine (4) changes its dampening action during a transition from cylinder shut-off to cylinder turn-on mode and/or back.

4. A drive system according to Claim 3, in which the dampening action increases upon transition from cylinder turn-on to cylinder shut-off mode and decreases upon transition in the opposite direction.

5. A drive system according to Claim 3 or 4, in which the electric machine (4) changes its dampening action upon transition from cylinder turn-on to cylinder shut-off mode and/or vice versa without using control information of the cylinder turn-on or shut-off, on the basis of a detection of instantaneous rotational non-uniformities.

6. A drive system according to Claim 3 or 4, in which control information for controlling the transition from cylinder turn-on to cylinder shut-off mode and/or vice versa causes the change in the dampening action.

7. A drive system according to Claim 10, in which the electric machine (4) can superimpose a positive or a negative torque onto the alternating torques for the dampening of rotational non-uniformities for additionally achieving a driving action or a braking or generator-type action.

8. A drive system according to one of the preceding Claims, in which the electric machine (4) furthermore has the function of a starter for the internal combustion engine (1) and/or the function of a generator for current supply.

9. A drive system according to one Claim 2 to 8, in which the electric machine (4) can produce or sustain an acceleration and/or braking of the drive shaft (10) or of the shaft, in order to accelerate or brake a vehicle and/or to reduce the slip of a drive wheel in the context of an anti-slip control by braking.

10. A drive system according to one the preceding Claims, in which auxiliary machines, such as air conditioners (29), servo-drives (30) and pumps are electrically operated at a high voltage level from the intermediate circuit.

11. A drive system according to one of the preceding Claims, in which the electric machine (4) works as an electromagnetic coupling in the drive train (2) and/or as an active transmission synchronization device or as a part thereof.

## Revendications

1. Système d'entraînement, en particulier pour un véhicule à moteur, comportant:
- un moteur à combustion interne multicylindre (1);
- un dispositif (31 ou 33) pour mettre hors-circuit au moins un cylindre du moteur à combustion interne (1);
- une machine électrique à champ tournant (4) pour l'amortissement actif d'irrégularités de rotation par production de moments de rotation changeants, la machine électrique (4) étant au moins active pendant la marche en mise hors circuit du cylindre, pour l'amortissement des irrégularités de rotation, alors plus grandes;
- au moins un onduleur (17) pour produire les tensions et/ou les intensités nécessaires pour les champs magnétiques de la machine électrique (4), de fréquence, d'amplitude et/ou de phase variables;
- dans lequel l'onduleur (17) présente un circuit intermédiaire d'un niveau de tension élevé par rapport à un réseau de bord;
- et dans lequel l'onduleur (17) qui se trouve dans le circuit intermédiaire est équipé d'un accumulateur d'énergie (19, 24) pour l'accumulation intermédiaire de l'énergie qui apparaît lors de l'amortissement actif;
- dans lequel aussi bien le prélèvement d'énergie dans le circuit intermédiaire en mode moteur de la machine électrique (4) que l'amenée d'énergie dans le circuit intermédiaire en mode génératrice se fait chaque fois au niveau de tension élevé.

2. Système d'entraînement selon la revendication 1, dans lequel la machine électrique (4) pour l'amortissement actif d'irrégularités de rotation agit sur un arbre d'entraînement (10) du moteur à combustion interne (1) ou sur un arbre qui lui est ou peut lui être couplé.

3. Système d'entraînement selon la revendication 1 ou 2, dans le cas duquel, lors d'un passage de la marche en mise hors circuit du cylindre à la marche en mise en circuit du cylindre et/ou inversement, la machine électrique (4) modifie son action d'amortissement.

4. Système d'entraînement selon la revendication 3, dans le cas duquel, lors du passage de la marche en mise en circuit du cylindre à la marche en mise hors circuit du cylindre, l'action d'amortissement augmente ou, lors d'un passage inverse, diminue.

5. Système d'entraînement selon la revendications 3 ou 4, dans le cas duquel, lors d'un passage de la marche en mise en circuit du cylindre et la marche en mise hors circuit du cylindre et/ou inversement, la machine électrique (4) modifie son action d'amortissement sur la base d'une saisie d'irrégularités de rotation instantanées, sans employer d'information concernant la commande de la mise en circuit ou hors circuit du cylindre.

6. Système d'entraînement selon la revendication 3 ou 4, dans le cas duquel une information concernant la commande du passage de la marche en mise en circuit du cylindre à la marche en mise hors circuit du cylindre et/ou inversement provoque la modification de l'action d'amortissement.

7. Système d'entraînement selon la revendication 10, dans le cas duquel, la machine électrique (4) superpose, pour donner en supplément une action d'entraînement ou une action de frein ou de génératrice, un moment de rotation positif ou négatif aux moments de rotation changeants exercés pour l'amortissement d'irrégularités de rotation.

8. Système d'entraînement selon l'une des revendications précédentes, dans le cas duquel la machine électrique (4) a en outre la fonction d'un démarreur pour le moteur à combustion interne (1) et/ou la fonction d'une génératrice pour l'alimentation en courant.

9. Système d'entraînement selon l'une des revendications 2 à 8, dans lequel la machine électrique (4) peut provoquer ou aider une accélération et/ou un freinage de l'arbre d'entraînement (10) ou de l'arbre, pour accélérer ou freiner un véhicule et/ou pour diminuer le patinage d'une roue motrice dans le cadre d'une régulation antipatinage par freinage.

10. Système d'entraînement selon l'une des revendications précédentes, dans le cas duquel, 1 à partir du circuit intermédiaire, des machines auxiliaires, comme des machines de climatisation (29), des servomécanismes d'entraînement (30), des pompes, sont entraînées électriquement à un niveau de tension élevé.

11. Système d'entraînement selon l'une des revendications précédentes, dans le cas duquel la machine électrique (4) agit comme couplage électromagnétique sur la chaîne de transmission (2) et/ou comme dispositif de synchronisation active de la boîte de vitesses ou comme en étant une partie.
